(19) Europäisches Patentamt
European Patent Office
Office européen des brevets

(11) EP 3 312 210 B1

(12) EUROPEAN PATENT SPECIFICATION

(45) Date of publication and mention of the grant of the patent:
**30.03.2022 Bulletin 2022/13**

(21) Application number: **16811647.3**

(22) Date of filing: **15.06.2016**

(51) International Patent Classification (IPC):
***C08G 59/06*** *(2006.01)* ***C08G 59/10*** *(2006.01)*
***C08G 59/50*** *(2006.01)* ***C08J 5/24*** *(2006.01)*

(52) Cooperative Patent Classification (CPC):
**C08G 59/10; C08G 59/06; C08G 59/50; C08J 5/24**

(86) International application number:
**PCT/JP2016/067771**

(87) International publication number:
**WO 2016/204173 (22.12.2016 Gazette 2016/51)**

(54) **EPOXY RESIN COMPOSITION, PREPREG, AND FIBER-REINFORCED COMPOSITE MATERIAL**

EPOXIDHARZZUSAMMENSETZUNG, PREPREG UND FASERVERSTÄRKTES VERBUNDMATERIAL

COMPOSITION DE RÉSINE ÉPOXY, PRÉIMPRÉGNÉ ET MATÉRIAU COMPOSITE RENFORCÉ PAR DES FIBRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2015 JP 2015123578**
**19.06.2015 JP 2015123579**

(43) Date of publication of application:
**25.04.2018 Bulletin 2018/17**

(73) Proprietor: **Toray Industries, Inc.**
**Tokyo 103-8666 (JP)**

(72) Inventors:
- **FURUKAWA, Koji**
**Iyo-gun**
**Ehime 791-3193 (JP)**
- **ARAI, Atsuhito**
**Iyo-gun**
**Ehime 791-3193 (JP)**
- **SAKATA, Hiroaki**
**Iyo-gun**
**Ehime 791-3193 (JP)**

(74) Representative: **Mewburn Ellis LLP**
**Aurora Building**
**Counterslip**
**Bristol BS1 6BX (GB)**

(56) References cited:

| | |
|---|---|
| WO-A1-03/040206 | WO-A1-2005/083002 |
| WO-A1-2007/037500 | WO-A1-2010/047244 |
| WO-A1-2015/005411 | WO-A1-2015/005411 |
| WO-A1-2015/012348 | WO-A1-2016/080202 |
| WO-A2-2014/049028 | GB-A- 2 460 050 |
| JP-A- H04 217 675 | JP-A- H04 328 115 |
| JP-A- 2012 082 342 | JP-A- 2014 145 017 |
| JP-A- 2014 145 018 | JP-A- 2014 145 018 |
| JP-A- 2015 193 713 | US-A1- 2011 049 426 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 312 210 B1

## Description

The present invention relates to a prepreg and a fiber-reinforced composite material.

BACKGROUND ART

Conventionally, a fiber-reinforced composite material composed of a reinforcing fiber such as a carbon fiber or a glass fiber and a thermosetting resin such as an epoxy resin or a phenol resin is lightweight but excellent in mechanical properties such as strength and stiffness, heat resistance and corrosion resistance, it has been applied to a number of fields such as aerospace, an automobile, a railroad vehicle, a ship, civil engineering, and sporting goods. In particular, in applications requiring high performance, a fiber-reinforced composite material using a continuous reinforcing fiber is used. As the reinforcing fiber, a carbon fiber excellent in specific strength and specific modulus is used, and as the matrix resin, a thermosetting resin, in particular, an epoxy resin having adhesiveness particularly to carbon fibers, heat resistance, modulus of elasticity, and chemical resistance and having a small curing shrinkage is often used.

In recent years, as examples in which fiber-reinforced composite materials are used increase, the required properties of fiber-reinforced composite materials are becoming more stringent, and when they are applied to aerospace applications and structural materials such as vehicles, significant improvement in heat resistance is demanded to sufficiently maintain physical properties even under high temperature and high humidity conditions. In particular, since the engine parts of aircraft and skin parts of fighter aircraft are always exposed to high temperatures, even higher heat resistance of 180°C or higher is needed as compared with ordinary aircraft structural parts.

The glass transition temperature is an indicator of the heat resistance of a fiber-reinforced composite material. A composite material used as an aircraft part is demanded to have high heat resistance not only in a dry state but also in a moisture absorbing state assuming actual operating conditions. It is known that a general epoxy resin used as a matrix resin of a fiber-reinforced composite material absorbs about 4% by mass when immersed in boiling water, and the glass transition temperature after water absorption lowers by about from 50 to 60°C from the glass transition temperature in a dry state. For fiber-reinforced composite materials for aircraft parts, a matrix resin having a high glass transition temperature even under moisture absorption conditions is needed to be used. Among such aircraft parts, parts requiring particularly high heat resistance such as aircraft engine parts or skin parts of fighter aircraft demand a high glass transition temperature of 180°C or higher.

Therefore, studies have been made to impart high heat resistance to the epoxy resin. As a method of improving heat resistance and compression strength of a fiber-reinforced composite material, there is disclosed a method of applying a tetraglycidyl amine epoxy resin and diaminodiphenyl sulfone to a matrix resin (Patent Document 1). Although this resin composition provides a fiber-reinforced composite material having excellent heat resistance and compression strength, there is a problem that tensile strength is insufficient because the elongation of a cured resin decreases. In general, when the cross-linking density of an epoxy resin is increased, its heat resistance is improved, but mechanical properties such as elongation and tensile strength tend to deteriorate, and therefore, it is difficult to achieve both excellent heat resistance and excellent mechanical properties at the same time.

As a method of improving the heat resistance and mechanical properties of a fiber-reinforced composite material, there is disclosed a method using a binaphthalene epoxy resin having a rigid skeleton (Patent Document 2). Even with this method, a cured resin excellent in heat resistance can be obtained, but since its elongation is not sufficient, the obtained fiber-reinforced composite material has insufficient tensile strength. In order to impart elongation to the binaphthalene epoxy resin, there is disclosed a method of reducing the cross-linking density of a resin by using an oligomer or an aliphatic epoxy resin (Patent Documents 3 and 4). However, with this method using an oligomer or an aliphatic epoxy resin, since the cross-linking density is lowered, there is a problem that the compression strength of the resin and heat resistance under moisture absorption conditions are greatly deteriorated. As described above, when an epoxy resin is used as a matrix resin, it has been difficult to develop a high glass transition temperature of 180°C or more under moisture absorption condition while maintaining the mechanical properties.

Examples of thermosetting resins having better heat resistance than epoxy resins include a polyimide resin, a cyanate resin, and a maleimide resin. However, since such resins have higher viscosity at room temperature than epoxy resins, handling properties such as tackiness property and drapability when formed into a prepreg are deteriorated. Usually, in production of a fiber-reinforced composite material, a molding step is carried out in which a plurality of prepregs are laminated and then heated under pressure. When the tackiness property of the prepreg is lowered, the adhesiveness between the prepregs becomes low at the time of lamination, and the prepreg is immediately peeled off, and therefore, handling properties are remarkably deteriorated. When the drapability is low, the prepreg is hard, and therefore, there has been a problem that not only the laminating workability deteriorates remarkably but also a laminated prepreg does not accurately follow the local shape of a mold, a wrinkle is generated, or a reinforcing fiber is broken to cause a defect in a molded article.

Furthermore, since a curing reaction of a highly heat-resistant resin such as a maleimide resin is gentle, heating

at a high temperature for a long time is needed at the time of molding a prepreg, and its viscosity is greatly lowered as the temperature rises. For this reason, a large amount of resin flows out during molding of a prepreg, causing a decrease in resin content of a composite material and voids in the resin, which may adversely affect mechanical properties and appearance. In recent years, studies have also been made to improve the handling properties of a prepreg using a maleimide resin. However, since the heat resistance of a resin is lowered by an oligomer component blended in a maleimide resin for handling property and viscosity control, it has not yet been achieved to impart handling properties equivalent to those of an epoxy resin while maintaining high heat resistance of the maleimide resin (Patent Document 5). Patent Document 6 proposes an epoxy resin composition that provides a cured product superior in heat resistance, elongation and curability that comprises a tri- or higher functional binaphthalene type epoxy resin with a dicyandiamide, a diaminodiphenyl sulfone and a urea compound.

Patent Document 7 proposes a resin system used for making a composite material in a liquid moulding process which comprises an epoxy component, at least 35wt% of which is a naphthalene-based epoxy resin. Patent Document 8 provides an epoxy resin composition characterized by comprising a selected class of curing agent [A1] and an aromatic epoxy resin [B] having three or more functionalities.

[Patent Document 1] JP S60-28420 A; [Patent Document 2] JP 2005-298815 A; [Patent Document 3] JP 2009-242585 A; [Patent Document 4] JP 2014-145017 A; [Patent Document 5] JP 2014-114369 A; [Patent Document 6] JP 2014-145018A; [Patent Document 7] GB 2460050 A; and [Patent Document 8] WO 2015 / 005411 A.

[Summary of Invention - Technical Problem]

For such reasons, it has been extremely difficult to develop a matrix resin in which its prepreg has tackiness property and drapability, and resin flow characteristics during molding and a high glass transition temperature of 180°C or more under moisture absorption conditions are attained at the same time.

An object of the present invention is to provide a prepreg for molding a fiber-reinforced composite material having excellent heat resistance under moisture absorption conditions.

[Solution to Problem]

The present invention provides a prepreg comprising an epoxy resin composition and reinforcing fiber, wherein the epoxy resin composition comprises the following component [A], component [B] and component [F], wherein the glass transition temperature of a cured product, which is obtained by curing the epoxy resin composition at 180°C for 2 hours, after immersing in boiling water at 1 atm for 48 hours is 180°C or more; and wherein the theoretical molecular weight between crosslinking points $\alpha$ of the cured epoxy resin composition, calculated as described later, is 230 g/mol or more;

[A]: A tri- or more functional binaphthalene epoxy resin represented by the following general formula (A-1);

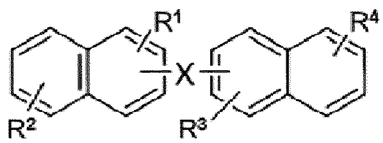

**(A−1)**

in the formula, X represents an alkylene group having 1 to 8 carbon atoms or a group represented by the following general formula (A-2); $R^1$ to $R^5$ each represent a group represented by the following general formula (A-3) or (A-4), a hydrogen atom, a halogen atom, a phenyl group or an alkyl group having 1 to 4 carbon atoms; $R^1$ to $R^4$ may be bonded to either ring of naphthalene skeletons, or may be simultaneously bonded to both rings; $R^5$ may be added anywhere in the benzene skeleton; three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other.

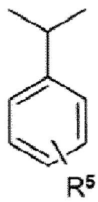

(A−2)

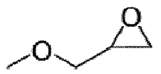

(A−3)

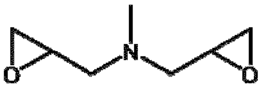

(A−4)

[B]: an aromatic amine compound; and [F]: a monofunctional or bifunctional epoxy resin having two or more four- or more-membered ring structures and including a glycidylamino group or glycidylether group directly bonded to the ring structure.

The fiber-reinforced composite material of the present invention is a fiber-reinforced composite material containing a cured product of the prepreg.

[Advantageous Effects of Invention]

According to the present invention, a prepreg capable of forming a fiber-reinforced composite material excellent in heat resistance under moisture absorption conditions, and a prepreg are provided. Composite materials using the same are useful for aircraft parts, automobile parts, industrial parts and the like.

[Description of Embodiments]

Hereinafter, the prepreg, the epoxy resin composition for the prepreg and the carbon fiber-reinforced composite material of the present invention will be described in detail.

A tri- or more functional binaphthalene epoxy resin of the component [A] is an epoxy resin represented by the following general formula (A-1). The component [A] has an effect of providing excellent heat resistance to an obtained cured resin.

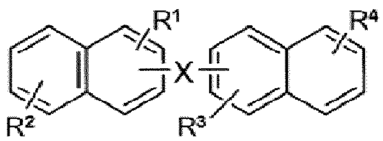

(A−1)

in the formula, X represents an alkylene group having 1 to 8 carbon atoms or a group represented by the following general formula (A-2). $R^1$ to $R^5$ each represent a group represented by the following general formula (A-3) or (A-4), a hydrogen atom, a halogen atom, a phenyl group or an alkyl group having 1 to 4 carbon atoms. $R^1$ to $R^4$ may be bonded to either ring of naphthalene skeletons, or may be simultaneously bonded to both rings. $R^5$ may be added anywhere in the benzene skeleton. three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other.

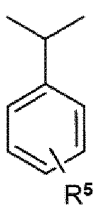

(A−2)

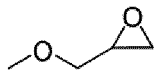

(A−3)

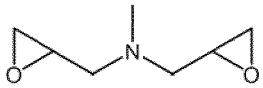

(A−4)

In the component [A], the number of functional groups is preferably 3 to 10, and more preferably 3 to 5. When the number of functional groups is too large, a matrix resin after curing becomes brittle, and the impact resistance may be impaired.

The epoxy resin represented by the general formula (A-1) may be obtained by any manufacturing method, and can be obtained by, for example, a reaction between a hydroxynaphthalene and epihalohydrin.

The component [A] is preferably contained in an amount of 30 to 80% by mass, and more preferably 40 to 70% by mass, based on 100 mass of the total epoxy resin. When the component [A] is 30% by mass or more, a cured resin having excellent heat resistance can be obtained. On the other hand, by setting the component [A] to 80% by mass or less, a cured resin having excellent elongation can be obtained.

Examples of commercially available products of the component [A] include "EPICLON (registered trademark)" EXA-4701, HP-4700, HP-4710 and EXA-4750 (all manufactured by DIC Corporation).

The component [B], the aromatic amine compound is used as a hardener for thermally curing an epoxy resin. By using the aromatic amine compound [B] as a hardener, an epoxy resin composition having favorable heat resistance can be obtained.

Examples of such aromatic amine compounds include 3,3'-diisopropyl-4,4'-diaminodiphenylmethane, 3,3'-di-*t*-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-*t*-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-*t*-butyl-5,5'-diethyl-4,4'-diaminodiphenylmethane, 3,3',5,5'-tetraisopropyl-4,4'-diaminodiphenylmethane, 3,3'-di-*t*-butyl-5,5'-diisopropyl-4,4'-diaminodiphenylmethane, 3,3',5,5'-tetra-*t*-butyl-4,4'-diaminodiphenylmethane, 4,4'-diaminodiphenylmethane, 4,4'-diaminodiphenyl sulfone, 3,3'-diaminodiphenyl sulfone, m-phenylenediamine, m-xylylene diamine and diethyl toluene diamine.

Among them, from the viewpoint that a cured product which is excellent in heat resistance and modulus of elasticity and further has less deterioration in heat resistance due to linear expansion coefficient and moisture absorption can be obtained in applications such as aerospace and spacecraft, a diaminodiphenyl sulfone such as 4,4'-diaminodiphenyl sulfone or 3,3'-diaminodiphenyl sulfone is preferable. These aromatic amine compounds may be used singly or in combination as appropriate. At the time of mixing with other components, these compounds may be in the form of either powder or liquid, and a mixture of powder and liquid aromatic amine compound may be used.

The amount of the component [B] is preferably such that the active hydrogen in the aromatic amine compound is 0.7 to 1.3, and preferably 0.8 to 1.2 per epoxy group in an epoxy resin composition. Here, the active hydrogen means a hydrogen atom which is bonded with nitrogen, oxygen or sulfur in an organic compound and has high reactivity. When the ratio of the epoxy group and the active hydrogen is within the predetermined range, a cured resin having excellent heat resistance and modulus of elasticity can be obtained.

Commercial products of component [B] include SEIKACURE-S (manufactured by Seika Corporation), MDA-220 (manufactured by Mitsui Chemicals, Inc.), "jER Cure (registered trademark)" W (manufactured by Mitsubishi Chemical Corporation), 3,3'-DAS (manufactured by Mitsui Chemicals, Inc.), "Lonzacure (registered trademark)" M-DEA, M-DIPA, M-MIPA and DETDA 80 (all manufactured by Lonza, Inc.).

A product obtained by preliminarily reacting the epoxy resin and hardener or a product obtained by preliminarily reacting a part of the epoxy resin and hardener may be added to the composition. This method is sometimes effective for viscosity control or improvement in storage stability.

In addition to the component [B], an accelerator may be used in combination as long as the heat resistance and thermal stability of the epoxy resin composition are not impaired. Examples of the accelerator include a tertiary amine, a Lewis acid complex, an onium salt, an imidazole compound, a urea compound and a hydrazide compound. The amount of the accelerator needs to be appropriately adjusted depending on the type of use, and is preferably 10 parts by mass or less, and more preferably 5 parts by mass or less, based on 100 parts by mass of the total epoxy resin. When the amount of the accelerator is set to be in such a range or less, the decrease in thermal stability of a resin composition to be obtained can be suppressed.

Since the heat resistance of the fiber-reinforced composite material has a positive correlation with the heat resistance of a cured resin obtained by curing the epoxy resin composition, in order to obtain a highly heat resistant fiber-reinforced composite material, it is important that a cured resin has high heat resistance. When the temperature

of the atmosphere exceeds the glass transition temperature, the glass transition temperature of a cured resin is often used as an index of heat resistance since the mechanical strength of the cured resin and in turn a fiber-reinforced composite material greatly decreases. When a fiber-reinforced composite material is used as a structural part of an aircraft or the like, high heat resistance under moisture absorption conditions is required. Since an object of the present invention is to obtain a fiber-reinforced composite material having high heat resistance under moisture absorption conditions, the glass transition temperature of a cured product, which is obtained by curing the epoxy resin composition at 180°C for 2 hours, measured by DMA (dynamic viscoelasticity measurement) after immersing in boiling water at 1 atm for 48 hours needs to be 180°C or higher, and is preferably 210°C or higher.

The epoxy resin composition may further include a thermoplastic resin soluble in a component [C] epoxy resin composition. The component [C] has an effect of easily dissolving in an epoxy resin composition by heating to control the tackiness property of a prepreg to be obtained, an effect of controlling the fluidity of a matrix resin when heat-curing the prepreg and an effect of imparting toughness without impairing heat resistance and modulus of elasticity of a fiber-reinforced composite material to be obtained.

Herein, "a thermoplastic resin is soluble in an epoxy resin composition" means that "20 parts by mass of a thermoplastic resin of interest is added to 100 parts by mass of the epoxy resin composition excluding the thermoplastic resin and when the mixture is stirred at 150°C for 60 minutes, the thermoplastic resin dissolves without separation".

The fact that the component [C] is soluble in an epoxy resin composition is important for improving the mechanical properties, micro crack resistance, and solvent resistance of a carbon fiber-reinforced composite material to be obtained. As such a thermoplastic resin, a thermoplastic resin composed of a polyaryl ether skeleton is preferable. Examples thereof include polysulfone, polyphenylsulfone, polyethersulfone, polyetherimide, polyphenylene ether, polyetheretherketone and polyether ether sulfone. Thermoplastic resins composed of these polyaryl ether skeletons may be used singly or in combination of a plurality thereof. Among these, polyethersulfone can be preferably used since toughness can be imparted without lowering the heat resistance and mechanical properties of the fiber-reinforced composite material to be obtained. Examples of commercial available products of polyethersulfone that can be suitably used as a thermoplastic resin soluble in an epoxy resin composition include "SUMIKA EXCEL (registered trademark)" PES 5003P (manufactured by Sumitomo Chemical Company, Limited) and "VIRANTAGE (registered trademark)" VW-10700RFP.

The amount of the component [C] is preferably in the range of 5 to 40 parts by mass, more preferably in the range of 10 to 35 parts by mass, and further preferably in the range of 15 to 30 parts by mass based on 100 parts by mass of the total epoxy resin. When the amount of the thermoplastic resin is within such a range, it is possible to balance the viscosity of the resin composition, in turn, the tackiness property of a prepreg to be obtained and the mechanical properties of a fiber-reinforced composite material to be obtained.

The epoxy resin composition may further contain a component [D], tri- or more functional glycidyl amine epoxy resin. The component [D] is a compound having three or more epoxy groups in one molecule, and has an effect of enhancing the heat resistance and modulus of elasticity of a cured resin to be obtained. In the component [D], the number of functional groups is preferably 3 to 7, and more preferably 3 to 4. When the number of functional groups is 7 or less, an epoxy resin composition excellent in toughness of the matrix resin after curing and excellent in impact resistance can be obtained.

Such a component [D] is preferably contained in an amount of 20 to 80% by mass, more preferably 30 to 60% by mass, based on 100% by mass of the total epoxy resin. When the component [D] is 20% by mass or more, a cured resin has excellent heat resistance and modulus of elasticity, which is preferable. On the other hand, when the component [D] is 70% by mass or less, the elongation of a cured resin is excellent, which is preferable.

Examples of the tri- or more functional glycidyl amine epoxy resin include epoxy resins such as a diaminodiphenylmethane epoxy resin, a diaminodiphenyl sulfone epoxy resin, an aminophenol epoxy resin, a metaxylenediamine-type epoxy resin, a 1,3-bisaminomethylcyclohexane epoxy resin or an isocyanurate epoxy resin. Among them, an epoxy resin selected from a diaminodiphenylmethane epoxy resin, a diaminodiphenylsulfone epoxy resin and an aminophenol epoxy resin are particularly preferably used since the physical properties of a cured resin to be obtained are well balanced.

Examples of commercially available products of the component [D] include ELM434 (manufactured by Sumitomo Chemical Company, Limited), "ARALDITE (registered trademark)" MY720, MY721, MY9512, MY9663 (manufactured by Huntsman Advanced Materials Corporation), "EPOTOHTO (registered trademark)" YH-434 (manufactured by TOHTO KASEI Co., Ltd.), TG4DAS (tetraglycidyl-4,4'-diaminodiphenylsulfone, manufactured by MITSUIFINE CHEMICAL Inc.), TG3DAS (tetraglycidyl-3,3'-diaminodiphenylsulfone, manufactured by MITSUI FINE CHEMICAL Inc.), ELM 120 and ELM 100 (manufactured by Sumitomo Chemical Company, Limited), "jER (registered trademark)" 630 (manufactured by Mitsubishi Chemical Corporation), "ARALDITE (registered trademark)" MY0510 (manufactured by Huntsman Corporation), "ARALDITE (registered trademark)" MY0600 (manufactured by Huntsman Corporation) and MY0610 (manufactured by Huntsman Corporation). Two or more different epoxy resins selected from these may be added as the component [D].

The epoxy resin composition may further include, as a component [E], a bi- or more functional epoxy resin, excluding the components [A] and [D] and the component [F] described below. The component [E] exerts a favorable

influence on physical properties of a cured resin such as modulus of elasticity, elongation and toughness of an epoxy resin composition and has an effect of adjusting the viscosity of an epoxy resin composition and the tackiness property and drapability when made into a prepreg by adjusting the amount.

The number of functional groups of the component [E] is 2 or more, and preferably 2 to 5. By setting the number of functional groups to 2 or more, deterioration of the heat resistance of an epoxy resin composition can be suppressed, and by setting the number of functional groups 5 or less, an epoxy resin composition excellent in toughness of a cured matrix resin and excellent in impact resistance is obtained, which is preferable.

The component [E] is preferably added in an amount of 10 to 40% by mass, and more preferably 20 to 30% by mass, based on 100% by mass of the total epoxy resin. A resin composition excellent in elongation can be obtained by setting the component [E] to 10% by mass or more. On the other hand, by setting the component [E] to 40% by mass or less, a cured resin having excellent heat resistance can be obtained.

Use of the following epoxy resin as the component [E] is preferable since an epoxy resin composition having high heat resistance can be obtained. As the bifunctional epoxy resin used as the component [E], a glycidyl ether epoxy resin or a glycidyl amine epoxy resin containing phenol as a precursor is preferably used. Examples of such an epoxy resin include bisphenol A epoxy resin, bisphenol F epoxy resin, bisphenol S epoxy resin, naphthalene epoxy resin, biphenyl epoxy resin, urethane modified epoxy resin and resorcinol epoxy resin.

Examples of tri- or more functional epoxy resins preferably used as the component [E] include a phenol novolac epoxy resin, an orthocresol novolac epoxy resin, a trishydroxyphenylmethane epoxy resin, a tetra phenylol ethane type epoxy resin, a 1,3-bisaminomethylcyclohexane epoxy resin, an isocyanurate epoxy resin and a hydantoin epoxy resin.

Examples of commercially available products of bisphenol A epoxy resin include "EPON (registered trademark)" 825 (manufactured by Mitsubishi Chemical Corporation), "EPICLON (registered trademark)" 850 (manufactured by DIC Corporation), "EPOTOHTO (registered trademark)" YD-128 (manufactured by TOHTO KASEI Co., Ltd.) and DER-331 and DER-332 (manufactured by Dow Chemical Company).

Examples of commercially available products of bisphenol F epoxy resin include "ARALDITE (registered trademark)" GY282 (manufactured by Huntsman Advanced Materials Corporation), "jER (registered trademark)" 806, "jER (registered trademark)" 807, "jER (registered trademark)" 1750 (all manufactured by Mitsubishi Chemical Corporation), "EPICLON (registered trademark)" 830 (manufactured by DIC Corporation) and "EPOTOHTO (registered trademark)" YD-170 (manufactured by TOHTO KASEI Co., Ltd.).

Examples of the naphthalene epoxy resin include "EPICLON (registered trademark)" HP-4032D (manufactured by DIC Corporation).

Examples of the glycidyl amine epoxy resin include PG-01 (diglycidyl-p-phenoxyaniline, manufactured by Toray Fine Chemicals Co., Ltd.).

Examples of commercially available products of the resorcinol epoxy resin include "DECONAL (registered trademark)" EX-201 (manufactured by Nagase ChemteX Corporation).

Examples of commercially available products of the 1,3-bisaminomethylcyclohexane epoxy resin include TETRAD-C (manufactured by MITSUBISHI GAS CHEMICAL COMPANY, INC.).

Examples of commercially available products of the isocyanurate epoxy resin include TEPIC-P (manufactured by Nissan Chemical Industries, Ltd.).

Examples of commercially available products of the trishydroxyphenylmethane epoxy resin include Tactix742 (manufactured by Huntsman Advanced Materials Corporation).

Examples of commercially available products of the tetra phenylol ethane type epoxy resin include "jER (registered trademark)" 1031S (manufactured by Mitsubishi Chemical Corporation).

Examples of commercially available products of the biphenyl epoxy resin include NC-3000 (manufactured by NIPPON KAYAKU Co., Ltd.).

Examples of commercially available products of the dicyclopentadiene epoxy resin include "EPICLON (registered trademark)" HP7200 (manufactured by DIC Corporation).

Examples of commercially available products of the urethane-modified epoxy resin include AER4152 (manufactured by Asahi Kasei Epoxy Co., Ltd.).

Examples of commercially available products of the phenol novolac epoxy resin include DEN431 and DEN438 (manufactured by Dow Chemical Company) and "jER (registered trademark)" 152 (manufactured by Mitsubishi Chemical Corporation).

Examples of commercially available products of the orthocresol novolac epoxy resin include EOCN-1020 (manufactured by NIPPON KAYAKU Co., Ltd.) and "EPICLON (registered trademark)" N-660 (manufactured by DIC Corporation).

Examples of commercially available products of the hydantoin epoxy resin include AY238 (manufactured by Huntsman Advanced Materials Corporation).

The epoxy resin composition further comprises component [F]. The component [F] is an epoxy resin having two or more four- or more-membered ring structures and including a glycidylamino group or glycidyl ether group directly

bonded to the ring structure. Here, the phrase "having two or more four- or more-membered ring structures" means having two or more four- or more-membered monocyclic structures such as cyclohexane, benzene or pyridine, or having at least one condensed ring structure composed of rings each of which is four- or more-membered ring such as phthalimide, naphthalene or carbazole.

The glycidylamino group directly bonded to the ring structure means having a structure in which an N atom of a bifunctional glycidylamino group is bonded to a ring structure. The glycidyl ether group directly bonded to the ring structure means having a structure in which an O atom of a monofunctional glycidyl ether group is bonded to a ring structure.

The amount of the component [F] is preferably 5 to 40% by mass based on 100% by mass of the total epoxy resin. In the component [F], a monofunctional epoxy resin is excellent in an effect of exhibiting strength, and a bifunctional epoxy resin is excellent in heat resistance. When the component [F] is a monofunctional epoxy resin, the amount is more preferably from 5 to 30% by mass based on the total amount of all the epoxy resins. When the component [F] is a bifunctional epoxy resin, the amount is more preferably from 10 to 40% by mass based on the total amount of all the epoxy resins. In view of obtaining excellent heat resistance, it is more preferable that the component [F] is a bifunctional epoxy resin.

When the epoxy resin composition contains the component [F], the content of the component [D] is preferably 10 to 60% by mass, more preferably 20 to 50% by mass based on 100% by mass of the total epoxy resin. When the component [D] is 10% by mass or more, the modulus of elasticity of a cured resin product is excellent, which is preferable. On the other hand, when the component [D] is 60% by mass or less, the toughness of a cured resin is excellent, which is preferable.

In view of obtaining excellent heat resistance and mechanical properties, the component [F] is preferably a difunctional epoxy resin having a structure represented by the following general formula (F-1).

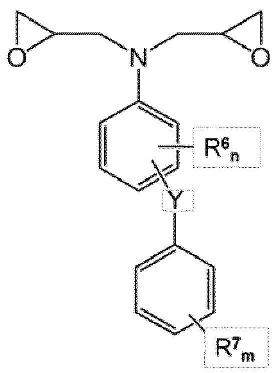

(F−1)

In the formula, $R^6$ and $R^7$ each independently represent at least one selected from the group consisting of an aliphatic hydrocarbon group having 1 to 4 carbon atoms, an alicyclic hydrocarbon group having 3 to 6 carbon atoms, an aromatic hydrocarbon group having 6 to 10 carbon atoms, a halogen atom, an acyl group, a trifluoromethyl group and a nitro group. n is an integer of 0 to 4, and m is an integer of 0 to 5. Y represents one selected from -O-, -S-, -CO-, -C(=O)O-, $-SO_2-$.

Specific examples of the component [F] include glycidylphthalimide, glycidyl-1,8-naphthalimide, glycidylcarbazole, glycidyl-3,6-dibromocarbazole, glycidylindole, glycidyl-4-acetoxyindole, glycidyl-3-methylindole, glycidyl-3-acetylindole, glycidyl-5-methoxy-2-methylindole, o-phenylphenylglycidyl ether, p-phenylphenyl glycidyl ether, *p*-(3-methylphenyl) phenyl glycidyl ether, 2,6-dibenzyl phenyl glycidyl ether, 2-benzyl phenyl glycidyl ether, 2,6-diphenyl phenyl glycidyl ether, 4-α-cumyl phenyl glycidyl ether, o-phenoxyphenyl glycidyl ether, p-phenoxyphenyl glycidyl ether, diglycidyl-1-aminonaphthalene, diglycidyl-p-phenoxy aniline, diglycidyl-4-(4-methylphenoxy)aniline, diglycidyl-4-(3-methylphenoxy) aniline, diglycidyl-4-(2-methylphenoxy)aniline, diglycidyl-4-(4-ethylphenoxy)aniline, diglycidyl-4-(3-ethylphenoxy)aniline, diglycidyl-4-(2-ethylphenoxy)aniline, digycidyl-4-(4-propylphenoxy)aniline, diglycidyl-4-(4-*tert*-butylphenoxy) aniline, diglycidyl-4-(4-cyclohexylphenoxy)aniline, diglycidyl-4-(3-cyclohexylphenoxy)aniline, diglycidyl-4-(2-cyclohexylphenoxy)aniline, diglycidyl-4-(4-methoxyphenoxy)aniline, diglycidyl-4-(3-methoxyphenoxy)aniline, diglycidyl-4-(2-methoxyphenoxy)aniline, diglycidyl-4-(3-phenoxyphenoxy)aniline, diglycidyl-4-(4-phenoxyphenoxy)aniline, diglycidyl-4-[4-(trifluoromethyl)phenoxy]aniline, diglycidyl-4-[3-(trifluoromethyl)phenoxy]aniline, diglycidyl-4-[2-(trifluoromethyl)phenoxy]aniline, diglycidyl-p-(2-naphthyloxyphenoxy)aniline, diglycidyl-*p*-(1-naphthyloxyphenoxy)aniline, diglycidyl-4-[(1,1'-biphenyl-4-yl)oxy]aniline, diglycidyl-4-(4-nitrophenoxy)aniline, diglycidyl-4-(3-nitrophenoxy)aniline, diglycidyl-4-(2-nitrophenoxy)aniline, diglycidyl-4-(4-methylphenoxy)aniline, diglycidyl-4-(3-methylphenoxy)aniline, diglycidyl-4-(2-methylphenoxy)aniline, diglycidyl-4-(4-ethylphenoxy)aniline, diglycidyl-4-(3-ethylphenoxy)aniline, diglycidyl-4-(4-tert-butylphenoxy)aniline, diglycidyl-4-(4-cyclohexylphenoxy)aniline, diglycidyl-*p*-(2-naphthyloxyphenoxy)aniline and

diglycidyl-3-(phenylsulfonyl) aniline.

Commercially available products of the component [F] include "DENACOL (registered trademark)" Ex-731 (*N*-glycidyl phthalimide, manufactured by Nagase ChemteX Corporation), OPP-G (o-phenylphenyl glycidyl ether, manufactured by SANKO CO., LTD.) and PG-01 (diglycidyl-p-phenoxyaniline, manufactured by Toray Fine Chemicals Co., Ltd.).

In the epoxy resin composition, an epoxy compound other than those described above can also be appropriately added as long as the compound does not significantly deteriorate heat resistance and mechanical properties.

Since a cured resin obtained by curing an epoxy resin composition attains high heat resistance and elongation at the same time, and a fiber-reinforced composite material having high heat resistance and excellent tensile strength can be obtained, the theoretical molecular weight between crosslinking points α of the cured epoxy resin is 230 g/mol or more. The theoretical molecular weight between crosslinking points α is more preferably in the range of 230 to 350 g/mol, and still more preferably in the range of 230 to 310 g/mol. Here, the theoretical molecular weight between crosslinking points α is a value derived by calculation from components constituting the epoxy resin composition, and is the value obtained by dividing the weight W of the whole cured resin obtained by curing the epoxy resin composition by the number c of crosslinking points in the whole cured resin. Here, the weight W of the whole cured resin means the total weight of all the epoxy resin components and aromatic amine components contained in the epoxy resin composition, and other components are not included in the calculation.

The theoretical molecular weight between crosslinking points α is inversely proportional to the cross-linking density of the cured resin. The theoretical molecular weight between crosslinking points α has a positive correlation with the toughness of the cured resin and has a negative correlation with the glass transition temperature which is an index of the heat resistance. When the theoretical molecular weight between crosslinking points α is 220 g/mol or more, an appropriate cross-linking density of the cured resin is obtained, the toughness of the cured resin is increased, and mechanical properties such as the tensile strength of a fiber-reinforced composite material to be obtained are enhanced.

The theoretical molecular weight between crosslinking points α can be obtained by the calculation described below. First, when k (k is an integer) epoxy resin components are contained in the epoxy resin composition, among them, the amount of the i-th (i is an integer of 1 to k) epoxy resin component is defined as ai (unit: g). When 1 (1 is an integer) aromatic amine components are contained in the epoxy resin composition, the weight W (unit: g) of the total cured resin is obtained by the formula (1), where bj (unit: g) is the amount of the j-th (j is an integer of 1 to 1) aromatic amine.

$$\boldsymbol{W} = \sum_{i=1}^{k} \boldsymbol{a}_i + \sum_{j=1}^{l} \boldsymbol{b}_j \qquad \text{formula (1)}$$

Let Ei (unit: g/mol) be the epoxy equivalent weight of the i-th epoxy resin component and $x_i$ be the number of epoxy groups contained in one molecule of the i-th epoxy resin component. Let Hj (unit: g/mol) be the active hydrogen equivalent of the j-th aromatic amine component, and yj be the number of active hydrogens contained in one molecule of the j-th aromatic amine component. The method of obtaining the number c (unit: mol) of the crosslinking points contained in the cured all resin differs between cases in which the compounding ratio of the epoxy resin and the aromatic amine is stoichiometric amount, cases in which the aromatic amine is excessive and cases in which the epoxy resin is excessive. Which method of obtaining is adopted is determined by the compounding ratio index β representing the compounding ratio of the epoxy resin and the aromatic amine, which is obtained by the formula (2).

$$\boldsymbol{\beta} = \sum_{j=1}^{l} \frac{b_j}{H_j} \Big/ \sum_{i=1}^{k} \frac{a_i}{E_i} \qquad \text{formula (2)}$$

Here, when β = 1, the compounding ratio of the epoxy resin and the aromatic amine is the stoichiometric amount, and the number c of the crosslinking points is obtained by the formula (3). The number c of the crosslinking points represents the number of crosslinking points generated by reacting all reactable epoxy groups with active hydrogens of all the aromatic amines.

$$\boldsymbol{c} = \sum_{i=1}^{k} \left\{ \frac{a_i}{E_i \times x_i} \times (x_i - 2) \right\} + \sum_{j=1}^{l} \left\{ \frac{b_j}{H_j \times y_j} \times (y_j - 2) \right\} \quad \text{formula (3)}$$

When β > 1, the aromatic amine is in excess of the stoichiometric amount and the number c of the crosslinking points is determined by the formula (4).

$$c = \sum_{i=1}^{k}\left\{\frac{a_i}{E_i \times x_i} \times (x_i - 2)\right\} + \frac{1}{\beta} \times \sum_{j=1}^{l}\left\{\frac{b_j}{H_j \times y_j} \times (y_j - 2)\right\} \qquad \text{formula (4)}$$

When $\beta$ <1, the epoxy resin is in excess of the stoichiometric amount and the number c of the crosslinking points is determined by the formula (5).

$$c = \beta \times \sum_{i=1}^{k}\left\{\frac{a_i}{E_i \times x_i} \times (x_i - 2)\right\} + \sum_{j=1}^{l}\left\{\frac{b_j}{H_j \times y_j} \times (y_j - 2)\right\} \qquad \text{formula (5)}$$

Here, $E_i \times x_i$ and $H_j \times y_j$ represent the average molecular weight of the i-th epoxy resin component and the average molecular weight of the j-th aromatic amine component, respectively. (xi-2) represents the number of crosslinking points generated when all the epoxy groups in one molecule of the i-th epoxy resin component react with active hydrogens of aromatic amines and are incorporated into the crosslinked structure. ($y_j$-2) represents the number of crosslinking points generated when all the active hydrogens in one molecule of the j-th aromatic amine react with epoxy groups and are incorporated into the crosslinked structure. For example, when the i-th epoxy resin component is a tetrafunctional epoxy resin, one molecule has four epoxy groups, and the number of crosslinking points generated is 2 which is 4 - 2. In the case of a monofunctional epoxy resin, the number of crosslinking points generated is calculated as 0. When the j-th aromatic amine component has two active hydrogens per molecule, the number of crosslinking sites generated is 0 which is 2 - 2. The theoretical molecular weight between crosslinking points $\alpha$ can be obtained by the formula (6) using W and c obtained by the above-described formula.

$$\alpha = \frac{W}{c} \qquad \text{formula (6)}$$

Here, for example, the theoretical molecular weight between crosslinking points $\alpha$ is determined for a cured resin product of the epoxy resin composition composed of 90 g of epoxy resin 1 (epoxy group: 3, epoxy equivalent: 98 g/eq), 10 g of epoxy resin 2 (epoxy group: 2, epoxy equivalent: 135 g/eq) and 44.7 g of aromatic amine 1 (active hydrogen: 4, active hydrogen equivalent: 45 g/eq). First, the weight W of the whole cured resin is 144.7 g from the formula (1). Since $\beta$ obtained from the formula (2) is 1, the number c of the crosslinking points contained in the whole cured resin is 0.803 mol according to the formula (3). Therefore, the theoretical molecular weight between crosslinking points $\alpha$ of the cured resin product is determined to be 180 g/mol by the formula (6).

The epoxy resin composition preferably contains 20 to 60% by mass, more preferably 40 to 60% by mass of the epoxy resin component which is in liquid form at 40°C in 100% by mass of the total epoxy resin. By setting the amount of the component which is liquid at 40°C to such a range, the viscosity can be adjusted to an appropriate range without impairing the heat resistance of the epoxy resin composition, and handleability and mechanical properties when prepared into a prepreg can be achieved at the same time.

The epoxy resin composition may contain thermoplastic resin particles insoluble in the epoxy resin composition. The thermoplastic resin particles have an effect of improving the impact resistance of a fiber-reinforced composite material to be obtained. Generally, the fiber-reinforced composite material has a laminated structure, and when an impact is applied thereto, high stress occurs between the layers, and peeling damage occurs. Therefore, when improving the impact resistance against an impact from the outside, it is sufficient to improve the toughness of a resin layer (hereinafter, also referred to as "interlayer resin layer") that does not contain reinforcing fibers, which is formed between layers composed of reinforcing fibers of a fiber-reinforced composite material. The toughness is also improved by blending the component [C] in the epoxy resin, and in order to increase the toughness of the interlayer resin layer of the fiber-reinforced composite material, thermoplastic resin particles insoluble in the epoxy resin composition may further be added.

Polyamide and polyimide can be preferably used as the thermoplastic resin which is a component of such particles, and among them polyamide which can greatly improve impact resistance due to excellent toughness is most preferable. As the polyamide, nylon 12, nylon 11, nylon 6, nylon 66, nylon 6/12 copolymer, a nylon (semi-IPN nylon) which was semi-IPNized (macromolecular interpenetrating network structure) with the epoxy compound described in Example 1 of JP H01-104624 A or the like can be suitably used. The shape of the thermoplastic resin particles may be spherical particles, nonspherical particles, or porous particles, and a spherical shape is preferable in that it has excellent viscoelasticity because it does not deteriorate the resin flow property, has no origin of stress concentration, and gives high impact resistance.

As commercially available products of polyamide particles, SP-500, SP-10, TR-1, TR-2, 842P-48, 842P-80 (all manufactured by Toray Industries, Inc.), "ORGASOL (registered trademark)" 1002D, 2001UD, 2001EXD, 2002D, 3202D, 3501D, 3502D (all manufactured by Arkema Co. Ltd.), "GRILAMID (registered trademark)" TR90 (manufactured by

Emsuberke), "TROGAMID (registered trademark)" CX7323, CX9701, CX9704, (manufactured by Degussa Corporation) or the like can be used. These polyamide particles may be used singly or in combination.

In order to increase the toughness of the interlayer resin layer of the fiber-reinforced composite material, the thermoplastic resin particles are preferably stayed in the interlayer resin layer. Therefore, the number average particle size of the thermoplastic resin particles is preferably in the range of 5 to 50 μm, more preferably in the range of 7 to 40 μm, and further preferably in the range of 10 to 30 μm. When the number average particle size is 5 μm or more, the particles do not enter a bundle of reinforcing fibers, and can stay in an interlayer resin layer of a fiber-reinforced composite material to be obtained. When the number average particle size is 50 μm or less, the thickness of the matrix resin layer on the surface of the prepreg can be optimized, and in turn, the fiber mass content ratio in the fiber-reinforced composite material to be obtained can be optimized.

The prepreg of the present invention is obtained by combining the above-mentioned epoxy resin composition with a reinforcing fiber as a matrix resin. Preferable examples of the reinforcing fiber include a carbon fiber, a graphite fiber, an aramid fiber and a glass fiber, and a carbon fiber is particularly preferable.

As the carbon fiber, any kind of carbon fiber can be used depending on the application, and from the viewpoint of impact resistance, a carbon fiber having a tensile modulus of at most 400 GPa is preferable. From the viewpoint of strength, a composite material having high stiffness and mechanical strength can be obtained, and a carbon fiber having a tensile strength of 4.4 to 6.5 GPa is preferably used. Tensile strain is also an important factor, and a carbon fiber having a high elongation with a tensile strain of 1.7 to 2.3% is preferable. A carbon fiber having a tensile modulus of at least 230 GPa, a tensile strength of at least 4.4 GPa, and a tensile strain of at least 1.7% is most suitable.

Examples of commercially available products of the carbon fiber include "TORAYCA (registered trademark)" T1100G-24 K, "TORAYCA (registered trademark)" T800S-24K, "TORAYCA (registered trademark)" T300-3K, and "TORAYCA (registered trademark) T700S-12K (all manufactured by Toray Industries, Inc.).

A prepreg can be produced by various known methods. For example, a prepreg can be manufactured by a method such as a wet method in which a matrix resin is dissolved in an organic solvent selected from acetone, methyl ethyl ketone and methanol to lower its viscosity to impregnate a reinforcing fiber or a hot melt method in which a matrix resin is heated without using an organic solvent to lower its viscosity to impregnate a reinforcing fiber.

In the wet method, a prepreg can be obtained by immersing a reinforcing fiber in a liquid containing a matrix resin, pulling the fiber up, and evaporating the organic solvent using an oven or the like.

In the hot melt method, a method of directly impregnating a reinforcing fiber with a matrix resin whose viscosity has been reduced by heating; a method of firstly preparing a release paper sheet with a resin film (hereinafter, also referred to as "resin film") obtained by once coating a matrix resin onto a release paper or the like, and then superimposing the resin film on the reinforcing fiber side from both sides or one side of a reinforcing fiber, and heating and pressurizing the resin film in such a manner to impregnate a reinforcing fiber with the matrix resin; or the like can be used.

Since substantially no organic solvent remains in a prepreg, a hot melt method of impregnating a reinforcing fiber with a matrix resin without using an organic solvent is preferable.

In the prepreg, the amount of reinforcing fibers per unit area is preferably 70 to 2000 $g/m^2$. When the reinforcing fiber amount is less than 70 $g/m^2$, the number of laminated sheets needs to be increased to obtain a predetermined thickness at the time of forming a fiber-reinforced composite material, which may make the operation complicated. On the other hand, when the amount of reinforcing fiber exceeds 2,000 $g/m^2$, the drapability of the prepreg tends to deteriorate.

The fiber mass content of the prepreg is preferably from 30 to 90% by mass, more preferably from 35 to 85% by mass, and still more preferably from 40 to 80% by mass. When the fiber mass content is less than 30% by mass, the amount of the resin is too large and the advantage of the fiber-reinforced composite material having excellent specific strength and specific modulus can not be obtained, and during molding of the fiber-reinforced composite material, the amount of heat generated during curing may become too high. When the fiber mass content exceeds 90% by mass, defective impregnation of the resin occurs, and the resultant composite material may have many voids.

In order to improve handleability of the prepreg such as tackiness property or drapability, the viscosity of the matrix resin at 50°C is preferably 50 to 5,000 Pa·s. The viscosity herein is the complex viscoelastic coefficient $\eta^*$ obtained by a dynamic viscoelasticity measuring apparatus. Tackiness property is the tackiness when using a prepreg. The drapability are the flexibility of the deformation of a prepreg and are properties that affect the shape-shaping property to a mold during lamination. When the drapability is low, it is difficult to shape a curved surface, and when the drapability is too high, a wrinkle easily occurs. By setting the viscosity of the resin to 50 Pa·s or more, the tackiness property can be prevented from being excessively strong, and the tack property can be prevented from being too large when impregnating a reinforcing fiber with the epoxy resin composition to prepare a prepreg. By setting the viscosity of the resin to less than 5,000 Pa·s, failure to sufficiently sticking to a molding die due to insufficient tackiness property can be prevented, and difficulty to shape into a molding die having a curvature due to a poor drapability can be prevented.

The minimum viscosity of the matrix resin is preferably 0.01 to 1.5 Pa·s when molding the prepreg. Here, the minimum viscosity refers to the lowest complex viscoelasticity $\eta^*_{min}$ of the epoxy resin composition measured by the method described in "(2) Viscosity Measurement of Epoxy Resin Composition" described below. By setting the minimum

viscosity of the matrix resin to 0.01 Pa·s or more, an increase in fiber mass content of the fiber-reinforced composite material due to outflow of a matrix resin during molding can be suppressed. By setting the minimum viscosity to 1.5 Pa·s or less, flowability is imparted to a matrix resin and the mechanical strength of a fiber-reinforced composite material can be prevented from reducing due to voids between layers formed when the prepreg is laminated.

The fiber-reinforced composite material of the present invention includes a cured product of the epoxy resin composition of the present invention and a reinforcing fiber. A fiber-reinforced composite material can be manufactured by laminating the above-described prepreg in a predetermined form, pressing and heating it to cure the resin. Here, as a method of applying heat and pressure, a press forming method, an autoclave molding method, a bag molding method, a wrapping tape method, an internal pressure molding method, or the like is employed.

Further, a carbon fiber-reinforced composite material can also be produced by a molding method in which an epoxy resin composition is directly impregnated into a reinforcing fiber and then heated and cured without using a prepreg such as a hand lay-up method, a filament winding method, a pultrusion method, a resin injection molding method or a resin transfer molding method.

EXAMPLES

Hereinafter, embodiments of the present invention will be described in detail by Examples. Examples 18, 22, 26 and 34 to 73 illustrate the invention of claim 1. The unit "part" of the compositional ratio means part by mass unless otherwise noted. The measurements of various properties (physical properties) were carried out in an environment at a temperature of 23°C and a relative humidity of 50% unless otherwise noted.

< Materials used in Examples and Comparative Examples >

(1) Component [A]: binaphthalene epoxy resin having three or more functional groups

"EPICLON (registered trademark)" EXA-4701 (manufactured by DIC Corporation, pentafunctional, epoxy equivalent: 167, solid at 40°C)
"EPICLON (registered trademark)" HP-4700 (tetrafunctional, epoxy equivalent: 165, solid at 40°C, manufactured by DIC Corporation)
"EPICLON (registered trademark)" EXA-4750 (trifunctional, epoxy equivalent: 185, solid at 40°C, manufactured by DIC Corporation).

(2) Component [B]: aromatic amine compound

- SEIKACURE-S (4,4'-diaminodiphenyl sulfone (4,4'-DDS), manufactured by Seika Corporation, amine equivalent: 62)
- 3,3'-DAS (3,3'-diaminodiphenylsulfone, manufactured by MITSUI FINE CHEMICAL Inc., amine equivalent: 62).

(3) Component [C]: thermoplastic resin soluble in epoxy resin composition

- "SUMIKA EXCEL (registered trademark)" PES 5003P (polyethersulfone, manufactured by Sumitomo Chemical Company, Limited)
- "VIRANTAGE (registered trademark)" VW-10700RFP (polyethersulfone, manufactured by Solvay Specialty Polymers Co., Ltd.)
- "Nanostrength (registered trademark)" M22N (block copolymer composed of butyl acrylate (Tg: -54°C and methyl methacrylate (Tg: 130°C), manufactured by Arkema Co., Ltd.).

(4) Component [D]: tri- or more functional glycidyl amine epoxy resin

- "ARALDITE (registered trademark)" MY0600 (triglycidyl-m-aminophenol, trifunctional, epoxy equivalent: 118, liquid at 40°C, manufactured by Huntsman Advanced Materials Corporation)
- "ARALDITE (registered trademark)" MY0510 (triglycidyl-p-aminophenol, trifunctional, epoxy equivalent: 118, liquid at 40°C, manufactured by Huntsman Advanced Materials Corporation)
- TG3DAS (tetraglycidyl-3,3'-diaminodiphenylsulfone, manufactured by MITSUI FINE CHEMICAL Inc., tetrafunctional, epoxy equivalent: 138, solid at 40°C.)
- ELM434 (tetraglycidyldiaminodiphenylmethane, manufactured by Sumitomo Chemical Company, Limited,

tetrafunctional, epoxy equivalent: 120, liquid at 40°C)

- ELM120 (triglycidyl aminophenol, trifunctional, epoxy equivalent: 118, liquid at 40°C, manufactured by Sumitomo Chemical Company, Limited)
- "jER (registered trademark)" 604 (tetraglycidyldiaminodiphenylmethane, manufactured by Mitsubishi Chemical Corporation, tetrafunctional, epoxy equivalent: 120, liquid at 40°C).

(5) Component [E]: bi- or more functional epoxy resin

- Naphthalene epoxy resin ("EPICLON (registered trademark)" HP-4032D, manufactured by DIC Corporation, bifunctional, epoxy equivalent: 142, liquid at 40°C)
- Bisphenol F epoxy resin ("ARALDITE (registered trademark)" GY282, manufactured by Huntsman Advanced Materials Corporation, bifunctional, epoxy equivalent: 172, liquid at 40°C)
- Cresol novolac epoxy resin ("EPICLON (registered trademark)" N-660, manufactured by DIC Corporation, polyfunctional, epoxy equivalent: 206, solid at 40°C)
- Biphenyl epoxy resin ("jER (registered trademark)" YX4000, manufactured by Mitsubishi Chemical Corporation, bifunctional, epoxy equivalent: 186, solid at 40°C)
- Bisphenol F epoxy resin ("jER (registered trademark)" 807, manufactured by Mitsubishi Chemical Corporation, bifunctional, epoxy equivalent: 170, liquid at 40°C)
- Bisphenol A epoxy resin ("jER (registered trademark)" 825, manufactured by Mitsubishi Chemical Corporation, bifunctional, epoxy equivalent: 175, liquid at 40°C)
- Bisphenol F epoxy resin ("EPICLON (registered trademark)" 830, manufactured by DIC Corporation, bifunctional, epoxy equivalent: 172, liquid at 40°C)
- Glycidyl ether epoxy resin ("DENACOL (registered trademark)" EX-411, manufactured by Nagase ChemteX Corporation, trifunctional, epoxy equivalent: 230, liquid at 40°C).

(6) Component [F]: epoxy resin having two or more four- or more-membered ring structures and having an amine glycidyl group or an ether glycidyl group directly bonded to the ring structure

- TORAY EPOXY PG-01 (diglycidyl-p-phenoxyaniline, manufactured by Toray Fine Chemicals Co., Ltd., bifunctional, epoxy equivalent: 167, liquid at 40°C)
- "DENACOL (registered trademark)" Ex-731 (*N*-glycidyl phthalimide, manufactured by Nagase ChemteX Corporation, monofunctional, epoxy equivalent: 216, liquid at 40°C)
- OPP-G (o-phenylphenylglycidyl ether, manufactured by SANKO CO., LTD., monofunctional, epoxy equivalent: 226, liquid at 40°C)
- *N*,*N*-diglycidyl-3-(phenylsulfonyl)aniline (bifunctional, epoxy equivalent: 173, liquid at 40°C) synthesized by the following method.

Into a four-necked flask equipped with a thermometer, a dropping funnel, a cooling tube and a stirrer, 610.6 g (6.6 mol) of epichlorohydrin was charged, and the temperature was raised to 70°C while nitrogen purging was carried out, and 273.9 g (1.1 mol) of phenyl 3-aminobenzenesulfonate dissolved in 1,020 g of ethanol was added dropwise thereto over 4 hours. The mixture was further stirred for 6 hours to complete the addition reaction to obtain 3-phenylsulfonyl-*N*,*N*-bis(2-hydroxy-3-chloropropyl)aniline. Subsequently, after the internal temperature of the flask was lowered to 25°C, 229 g (2.75 mol) of a 48% NaOH aqueous solution was added dropwise thereto over a period of 2 hours, followed by further stirring for 1 hour. After completion of the cyclization reaction, ethanol was distilled off, extraction was carried out with 408 g of toluene, and washing was carried out twice with 5% saline. Toluene and epichlorohydrin were removed from the organic layer under reduced pressure to give *N*,*N*-diglycidyl-3-(phenylsulfonyl) aniline.

(7) Carbon fiber

- "TORAYCA" T800S-24K-10E (24,000 fibers, fineness: 1,033 tex, tensile modulus: 294 GPa, density 1.8 g/cm$^3$, manufactured by Toray Industries, Inc.).

(8) Other components

- Dicyandiamide (DICY7, manufactured by Mitsubishi Chemical Corporation, amine equivalent: 12)
- 3-(3,4-dichlorophenyl) 1,1-dimethylurea (DCMU99, manufactured by Hodogaya Chemical Industry Co., Ltd.)
- Oligomer A (390 g of jER 807, 260 g of jER 630 (manufactured by Mitsubishi Chemical Corporation) and 350 g of BXP (manufactured by Mitsui Chemicals, Inc.) were reacted at 100°C for 1 hour, then 10 g of triphenylphosphine was added thereto, and the mixture was reacted at 100°C for 3 hours)

- "jER" (registered trademark) Cure W (mixture of 2,4-diethyl-6-methyl-m-phenylenediamine and 4,6-diethyl-2-methyl-m-phenylenediamine, manufactured by Mitsubishi Chemical Corporation)
- t-butyl catechol (manufactured by Tokyo Chemical Industry Co., Ltd.)
- Imidazole silane IS-1000 (manufactured by JX Nippon Mining &Metals Corporation)

< Various Evaluation Methods >

Using the following measuring method, epoxy resin compositions and prepregs of Examples were measured.

(1) Method of Measuring Glass Transition Temperature of Cured Epoxy Resin after Water Absorption

After injecting an epoxy resin composition into a mold, the temperature was raised from 30°C at a rate of 1.5°C/min in a hot air dryer, heat cured at 180°C for 2 hours, and then cooled to 30°C at a rate of 2.5°C/min to prepare a cured resin plate having a thickness of 2 mm. A test piece having a width of 12.7 mm and a length of 55 mm was cut out from the prepared cured resin plate and immersed in boiling water under 1 atm for 48 hours and then the glass transition temperature was determined by the DMA method according to SACMA SRM18R-94. In the storage modulus G' curve, the intersection temperature value of the tangent in the glass state and the tangent in the transition state was taken as the glass transition temperature. Here, measurement was performed at a temperature ramp rate of 5°C/min and a frequency of 1 Hz.

(2) Measurement of Viscosity of Epoxy Resin Composition

The viscosity of the epoxy resin composition was measured using a dynamic viscoelasticity device ARES-2KFRTN1-FCO-STD (manufactured by TA Instruments Inc.). A flat parallel plate with a diameter of 40 mm was used for the upper and lower measuring jigs, and an epoxy resin composition was set between the upper and lower jigs in such a manner that the distance between the upper and lower jigs was 1 mm, and then, measured with a torsion mode (measurement frequency: 0.5 Hz). The temperature was raised from 40°C to 150°C at a rate of 2°C/min, and, at this time, the complex viscoelasticity at 50°C was set to $\eta^*_{50}$, and the lowest complex viscoelastic ratio in the range of 40°C to 150°C was set to $\eta^*_{min}$.

(3) Tackiness Property Measurement of Prepreg

The tackiness property of a prepreg was measured using a tack tester (PICMA Tack Tester II: manufactured by Toyo Seiki Seisaku-sho, Ltd.). A cover glass of 18 mm × 18 mm was crimped to a prepreg for 5 seconds with a force of 0.4 kgf, the cover glass was pulled at a speed of 30 mm/min, and the tack value was measured by a resistance force at peeling. Here, the tackiness property was evaluated in the following three stages. The number of measurements was n = 5, and when the measurement results were different, the lowest evaluation was adopted.

A: The tack value was not less than 0.3 kg and not more than 2.0 kg, indicating a good adhesiveness.
B: The tack value was 0.1 kg or more and less than 0.3 kg, or 2.0 kg or more and 3.0 kg or less, and the adhesion is slightly strong or slightly weak.
C: The tack value was less than 0.1 kg, or more than 3.0 kg, and the tackiness is too strong or not sticky.

(4) Definition of 0° of Carbon Fiber-Reinforced Composite Material

As described in JIS K7017 (1999), when the fiber direction of an unidirectional fiber-reinforced composite material was defined as an axial direction and the axial direction was defined as the 0° axis, the direction perpendicular to the axis was defined as 90°.

(5) Measurement of 0° Tensile Strength of Carbon Fiber-Reinforced Composite Material

An unidirectional prepreg was cut to a predetermined size, six sheets were laminated in one direction, a vacuum bag was carried out, and the laminated sheets were cured by using an autoclave at a temperature of 180°C and a pressure of 6 kg/cm$^2$ for 2 hours to obtain an unidirectional reinforced material (carbon fiber-reinforced composite material). The unidirectional reinforced material was cut with a width of 12.7 mm and a length of 230 mm, and a tab made of glass fiber-reinforced plastic having 1.2 mm and a length of 50 mm was adhered to each end to obtain a test piece. This test piece was subjected to 0° tensile test according to the standard of JIS K7073 (1988) using Instron

Universal Testing Machine.

(6) Measurement of Open Hole Compression Strength (OHC) of Carbon Fiber-Reinforced Composite Material under High Temperature Moisture Absorption Condition

An unidirectional prepreg was cut to a predetermined size, 16 sheets were laminated to have a configuration of (+45/0/-45/90 degrees)2s, a vacuum bag was then performed, and the laminated sheets were cured by using an autoclave at a temperature of 180°C and a pressure of 6 kg/cm$^2$ for 2 hours to obtain a pseudoisotropic reinforced material (carbon fiber-reinforced composite material). This pseudoisotropic reinforced material was cut into a rectangle having 304.8 mm in the 0° direction and 38.1 mm in the 90° direction, punched a circular hole with a diameter of 6.35 mm in a center part, and processed into an open hole plate to obtain a test piece. This test piece was subjected to an open hole compression test (immersed in warm water at 70°C for 2 weeks and measured at 82°C) according to ASTM-D6484 standard, using Instron universal testing machine.

< Example 1 >

(Preparation of Epoxy Resin Composition)

An epoxy resin composition was prepared by the following method.

Into a kneading apparatus, epoxy resins corresponding to the component [A] and the component [D] listed in Table 1 were charged, the temperature was raised to 100°C, and the mixture was heated and kneaded at a temperature of 100°C for 30 minutes to dissolve the component [A].

Subsequently, while kneading was continued, the temperature was lowered to a temperature of 55 to 65°C, the component [B] listed in Table 1 was added, and the mixture was stirred for 30 minutes to obtain an epoxy resin composition. The amount of the component [B] was such that the active hydrogen contained in the component [B] amounts to 0.9 mol per 1 mol of epoxy groups contained in the epoxy resin composition. In Tables 1 to 10, "equivalent" of the component [B] means the number of moles of active hydrogens contained in the component [B] based on 1 mol of epoxy groups contained in the epoxy resin composition.

As a result of measuring the resin composition obtained in accordance with "(1) Method of Measuring Glass Transition Temperature of Cured Epoxy Resin after Water Absorption" in the various evaluation methods described above, the glass transition temperature after water absorption was 251°C, and high heat resistance was obtained.

The viscosity of the obtained resin composition was measured according to "(2) Measurement of Viscosity of Epoxy Resin Composition" of the various evaluation methods described above. As a result, $\eta^*_{50}$ was 569 Pa·s, and a prepreg having favorable tackiness property as described below was obtained. Further, $\eta^*_{min}$ was 0.29 Pa·s, and the resin flow during prepreg molding was appropriately controlled, and voids and the like were not observed in the molded fiber-reinforced composite material.

(Preparation of Prepreg)

The resin composition obtained in the above was coated on a release paper using a knife coater to prepare two resin films with a resin areal weight of 51.2 g/m$^2$. Next, two of the obtained resin films were laminated on both sides of carbon fibers arranged in one direction in such a manner that the fiber areal weight was 190 g/m$^2$ in a sheet form, and heated and pressed under conditions of a temperature of 130°C and a maximum pressure of 1 MPa to impregnate the epoxy resin composition, thereby obtaining a prepreg.

(Evaluation of Prepreg Properties)

The obtained prepreg was measured in accordance with "(3) Tackiness Property Measurement of Prepreg" of the various evaluation methods described above, thereby obtaining a favorable tackiness property which was 1.10 kg. The drapability at the time of molding was also suitable, and wrinkling and breakage of the prepreg did not become a problem.

Further, the obtained prepreg was measured in accordance with "(5) Measurement of 0° Tensile Strength of Carbon Fiber-Reinforced Composite Material" of the various evaluation methods described above, thereby obtaining a favorable tensile strength, which was 2,831 MPa.

Further, the obtained prepreg was measured according to "(6) Measurement of Open Hole Compression Strength (OHC) of Carbon Fiber-Reinforced Composite Material under High Temperature Moisture Absorption Condition" of the various evaluation methods described above, thereby obtaining excellent open hole compression strength even at high temperature moisture absorption, which was 268 MPa.

< Example 2 >

Into a kneading apparatus, epoxy resins corresponding to the component [A] and the component [D] listed in Table 1 were charged, the temperature was raised to 100°C, and the mixture was heated and kneaded at a temperature of 100°C for 30 minutes to dissolve the component [A].

Subsequently, while kneading was continued, the temperature was lowered to a temperature of 55 to 65°C, the component [C] listed in Table 1 was added, the temperature was then raised to 160°C, and the mixture was stirred at a temperature of 160°C for 60 minutes to dissolve the component [C] .

Then, while kneading was continued, the temperature was lowered to a temperature of 55 to 65°C, the component [B] listed in Table 1 was added, and the mixture was stirred for 30 minutes to obtain an epoxy resin composition. The obtained epoxy resin composition was used to prepare a prepreg in the same manner as in Example 1.

Even when the component [C] was added as in Example 2, a prepreg having a high glass transition temperature after water absorption at 240°C, adequate tackiness property and drapability was obtained. The tensile strength was 2,867 MPa, the open hole compression strength at high temperature moisture absorption was 272 MPa, and high mechanical strengths were obtained.

< Examples 3 to 15 >

In Examples 3 to 15, as listed in Tables 1 and 2, an epoxy resin composition and a prepreg were prepared in the same manner as in Example 2 except that the type and amount of the components [A], [C] and [D] contained in the epoxy resin composition were different.

Even when the types of the components [A], [C] and [D] were changed as in Examples 3 to 15, a high glass transition temperature after water absorption, excellent tackiness property, drapability and mechanical strength were obtained.

< Examples 16 to 33 >

Examples 16 to 33 were prepared in the same manner as in Example 2 except that when the component [A] and the component [D] were kneaded in the kneading apparatus with the compositions listed in Tables 2 to 4, a component [E] was added.

Even when the component [E] was added as in Examples 16 to 33, a high glass transition temperature after water absorption, excellent tackiness property and drapability, and mechanical strength were obtained. Examples 18, 22 and 26 contain the component [F].

Examples 1 to 17, 19 to 21, 23 to 25 and 27 to 33 do not contain a component [F] and do not illustrate the invention of claim 1; they are included for information only.

< Comparative Examples 1 to 5 >

Comparative Examples 1 to 5 were prepared in the same manner as in Example 2 except that the composition was changed as listed in Table 4.

When the glass transition temperature after water absorption was less than 180°C as in Comparative Examples 1 to 3, the open hole compression strength at the time of high temperature moisture absorption was lowered as compared with Example 1.

When the resin composition was cured by adding DICY7 and DCMU instead of the component [B] as in Comparative Examples 4 to 5, the open hole compression strength at the time of high temperature moisture absorption decreased as compared with the case where component [B] was added.

[Table 1]

| | | equivalent | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Component [A] | EXA-4701 | 167 | parts bv mass | | 40 | | | 40 | | | 40 | | |
| | HP-4700 | 165 | parts bv mass | 55 | | | 40 | | | 40 | | | 40 |
| | EXA-4750 | 185 | parts by mass | | | 40 | | | 40 | | | 40 | |
| Compo-nent [B] | SEIKA-CURE-S | 62 | equiva-lent | 0.9 | 0.9 | 0.9 | 0.9 | 0.9 | 0.9 | 0.9 | 0.9 | 0.9 | 0.9 |
| | 3,3'-DAS | 62 | equiva-lent | | | | | | | | | | |
| Compo-nent [C] | PES5003P | | parts by mass | | 3 | 3 | 3 | 3 | 3 | 3 | | | |
| | VW-10700RFP | | parts by mass | | | | | | | | 3 | 3 | 3 |
| Component [D] | MY0600 | 118 | parts by mass | 45 | 60 | 60 | | | | | | | 30 |
| | MY0510 | 118 | parts by mass | | | | 60 | 60 | 60 | | | | |
| | ELM434 | 120 | parts by mass | | | | | | | 60 | 60 | 60 | |
| | TG3DAS | 138 | parts by mass | | | | | | | | | | 30 |
| Component [E] | HP-4032D | 142 | parts by mass | | | | | | | | | | |
| | GY282 | 172 | parts by mass | | | | | | | | | | |
| | N-660 | 206 | parts by mass | | | | | | | | | | |

(continued)

| | | equivalent | Unit | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|
| Component [F] | PG-01 | 167 | parts by mass | | | | | | | | | | |
| Carbon fiber | "TORAYCA" T800S-24K-10E | | - | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Glass transition temperature after water absorption | | °C | 251 | 240 | 234 | 262 | 269 | 253 | 256 | 258 | 244 | 253 |
| | * Viscosity $\eta$ 50 at 50°C | | Pa·s | 569 | 653 | 1674 | 1099 | 678 | 1690 | 1162 | 760 | 2103 | 1328 |
| | * Minimum viscosity $\eta_{min}$ | | Pa·s | 0.29 | 0.35 | 0.72 | 0.53 | 0.39 | 0.76 | 0.62 | 0.41 | 0.88 | 0.65 |
| Prepreg | Tackiness property | | kg | 1.10 | 1.15 | 1.13 | 1.25 | 1.23 | 1.07 | 1.10 | 1.13 | 0.71 | 1.01 |
| | | | Evaluation | A | A | A | A | A | A | A | A | A | A |
| Fiber-reinforce d composite material | Tensile strength | | MPa | 2831 | 2867 | 2851 | 2832 | 2897 | 2911 | 2846 | 2873 | 2855 | 2835 |
| | Open hole compression strength at high temperature moisture absorption | | MPa | 268 | 272 | 270 | 276 | 277 | 282 | 276 | 277 | 273 | 279 |

[Table 2

| | | equivalent | Unit | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Component [A] | EXA-4701 | 167 | parts by mass | 40 | | | | | | | | | 40 |
| | HP-4700 | 165 | parts by mass | | | | 80 | 40 | 40 | 40 | 40 | 40 | |
| | EXA-4750 | 185 | parts by mass | | 40 | 30 | | | | | | | |
| Component [B] | SEIKACURE-S | 62 | equivalent | 0.9 | 0.9 | 0.9 | 0.9 | 0.9 | 0.9 | 0.9 | 0.9 | 0.9 | 0.9 |
| | 3,3'-DAS | 62 | equivalent | | | | | | | | | | |
| Component [C] | PES5003P | | parts by mass | | | | | | | | | | |
| | VW-10700RFP | | parts by mass | 3 | 3 | 3 | 3 | 3 | 3 | 3 | 3 | 3 | 3 |
| Component [D] | MY0600 | 118 | parts by mass | 30 | 30 | 30 | | 20 | | | | | 40 |
| | MY0510 | 118 | parts by mass | | | | 10 | | | | | | |
| | ELM434 | 120 | parts by mass | | | 40 | | 40 | 40 | 40 | 40 | 40 | |
| | TG3DAS | 138 | parts by mass | 30 | 30 | | | | | | | | |
| Component [E] | HP-4032D | 142 | parts by mass | | | | | | 20 | | | | 20 |
| | GY282 | 172 | parts by mass | | | | 10 | | | 20 | | | |
| | N-660 | 206 | parts by mass | | | | | | | | | 20 | |

(continued)

| | | equivalent | Unit | Example 11 | Example 12 | Example 13 | Example 14 | Example 15 | Example 16 | Example 17 | Example 18 | Example 19 | Example 20 |
|---|---|---|---|---|---|---|---|---|---|---|---|---|---|
| Component [F] | PG-01 | 167 | parts by mass | | | | | | | | 20 | | |
| Carbon fiber | "TORAYCA" T800S-24K-10E | | - | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Glass transition temperature after water absorption | | °C | 257 | 247 | 241 | 260 | 247 | 245 | 237 | 245 | 250 | 241 |
| | * Viscosity $\eta$ 50 at 50°C | | Pa·s | 771 | 2143 | 282 | 3277 | 318 | 633 | 589 | 624 | 2733 | 327 |
| | * Minimum viscosity $\eta_{min}$ | | Pa·s | 0.46 | 0.86 | 0.25 | 1.12 | 0.2 | 0.35 | 0.42 | 0.36 | 0.98 | 0.21 |
| Prepreg | Tackiness property | | kg | 1.20 | 0.94 | 1.07 | 0.16 | 1.47 | 1.52 | 1.39 | 1.51 | 0.98 | 1.62 |
| | | | Evaluation | A | A | A | B | A | A | A | A | A | A |
| Fiber-reinforced composite material | Tensile strength | | MPa | 2894 | 2931 | 3195 | 2863 | 3210 | 3154 | 3166 | 3187 | 3125 | 3201 |
| | Open hole compression strength at high temperature moisture | | MPa | 277 | 275 | 281 | 272 | 286 | 287 | 285 | 285 | 287 | 285 |

[Table 3]

| | | equivale | Unit | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Component [A] | EXA-4701 | 167 | parts by mass | 40 | 40 | 40 | 40 | 40 | 40 | 40 | | | |
| | HP-4700 | 165 | parts by mass | | | | | | | | | 60 | 30 |
| | EXA-4750 | 185 | parts by mass | | | | | | | | 30 | | |
| Compo-nent [B] | SEIKA-CURE-S | 62 | equiva-lent | 0.9 | 0.9 | 0.9 | 0.9 | 0.9 | 0.9 | 0.9 | 0.9 | | 0.9 |
| | 3,3'-DAS | 62 | equiva-lent | | | | | | | | | 0.9 | |
| Compo-nent [C] | PES5003P | | parts by mass | | | | | | | | | | |
| | VW-10700RFP | | parts by mass | 3 | 3 | 3 | 3 | 3 | 3 | 3 | 3 | 3 | |
| Component [D] | MY0600 | 118 | parts by mass | 40 | 40 | 40 | | | | | 50 | 30 | |
| | MY0510 | 118 | parts by mass | | | | 40 | 40 | 40 | 40 | | | 50 |
| | ELM434 | 120 | parts by mass | | | | | | | | | | |
| | TG3DAS | 138 | parts by mass | | | | | | | | | | |
| Component [E] | HP-4032D | 142 | parts by mass | | | | 20 | | | | | 10 | |
| | GY282 | 172 | parts by mass | 20 | | | | 20 | | | 20 | | 20 |
| | N-660 | 206 | parts by mass | | | 20 | | | | 20 | | | |

(continued)

| | | equiv-ale | Unit | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Compo-nent [F] | PG-01 | 167 | parts by mass | | 20 | | | | 20 | | | | |
| Carbon fiber | "TORAYCA" T800S-24K-10E | | - | Unidirec-tional sheet | Unidirec-tional sheet | Unidirec-tional sheet | Unidirec-tional sheet | Unidirec-tional sheet | Unidirec-tional sheet | Unidirec-tional sheet | Unidirec-tional sheet | Unidirec-tional sheet | Unidirec-tional sheet |
| Epoxy resin physical properties | Glass transition temperature after water absorption | | °C | 235 | 241 | 243 | 255 | 247 | 250 | 255 | 212 | 218 | 213 |
| | * Viscosity n 50 at 50°C | | Pa·s | 575 | 440 | 1886 | 564 | 444 | 459 | 1446 | 447 | 1804 | 65 |
| | * Minimum viscosity η min | | Pa·s | 0.31 | 0.26 | 0.81 | 0.29 | 0.35 | 0.31 | 0.68 | 0.24 | 0.78 | 0.04 |
| Prepreg | Tackiness property | | kg | 1.56 | 1.37 | 1.21 | 1.41 | 1.40 | 1.62 | 1.48 | 1.38 | 1.23 | 1.89 |
| | | | Evaluation | A | A | A | A | A | A | A | A | A | A |
| Fiber-reinforce d composite material | Tensile strength | | MPa | 3167 | 3182 | 3165 | 3149 | 3185 | 3125 | 3174 | 3205 | 2750 | 3224 |
| | Open hole compression strength at high temperaturemoisture absorption | | MPa | 284 | 284 | 286 | 289 | 287 | 288 | 290 | 277 | 289 | 271 |

[Table 4]

| | | equivalent | Unit | Example 31 | Comparative Example 1 | Comparative Example 2 | Comparative Example 3 | Example 32 | Example 33 | Comparative Example 4 | Comparative Example 5 |
|---|---|---|---|---|---|---|---|---|---|---|---|
| Component [A] | EXA-4701 | 167 | parts by mass | | 40 | | | | | | |
| | HP-4700 | 165 | parts by mass | 50 | | 30 | 20 | | | 55 | 45 |
| | EXA-4750 | 185 | parts by mass | | | | | 90 | 35 | | |
| Component [B] | SEIKACURE-S | 62 | equivalent | 0.9 | 0.9 | 1 | 0.9 | 0.9 | 0.9 | | |
| | 3,3'-DAS | 62 | equivalent | | | | | | | | |
| Component [C] | PES5003P | | parts by mass | | | | | | | | |
| | VW-10700RFP | | parts by mass | 10 | 3 | 3 | 3 | 10 | 3 | | |
| Component [D] | MY0600 | 118 | parts by mass | | | | 40 | | | | |
| | MY0510 | 118 | parts by mass | 50 | | | | | 25 | | |
| | ELM434 | 120 | parts by mass | | | | | 10 | | | 10 |
| | TG3DAS | 138 | parts by mass | | | | | | | | |

(continued)

| | | equivalent | Unit | Example 31 | Comparative Example 1 | Comparative Example 2 | Comparative Example 3 | Example 32 | Example 33 | Comparative Example 4 | Comparative Example 5 |
|---|---|---|---|---|---|---|---|---|---|---|---|
| Component [E] | HP-4032D | 142 | parts by mass | | | | | | | | |
| | GY282 | 172 | parts by mass | | 60 | 65 | 40 | | 40 | 10 | 10 |
| | N-660 | 206 | parts by mass | | | | | | | | |
| | YX4000 | 186 | parts by mass | | | | | | | 35 | 35 |
| | EX-411 | 229 | parts by mass | | | 5 | | | | | |
| Component [F] | PG-01 | 167 | parts by mass | | | | | | | | |
| Other components | DICY7 | 12 | equivalent | | | | | | | 1 | 1 |
| | DCMU99 | | parts by mass | | | | | | | 3 | 3 |
| Carbon fiber | "TORAYCA" T800S-24K-10E | | - | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Glass transition temperature after water absorption | | °C | 248 | 148 | 165 | 142 | 243 | 202 | 192 | 188 |
| | Viscosity η 50 at 50°C | | Pa·s | 4268 | 296 | 237 | 400 | 8930 | 308 | 2670 | 1836 |
| | Minimum viscosity η min | | Pa·s | 1.34 | 0.08 | 0.06 | 0.06 | 0.21 | 0.07 | 0.89 | 0.77 |
| Prepreg | Tackiness property | | kg | 0.16 | 1.51 | 1.62 | 1.90 | 0.06 | 1.42 | 0.36 | 0.42 |
| | | | Evaluation | B | A | A | A | C | A | A | A |
| Fiber-reinforced composite material | Tensile strength | | MPa | 3144 | 3102 | 2798 | 2965 | 2561 | 2866 | 2751 | 2890 |
| | Open hole compression strength at high temperature moisture absorption | | MPa | 282 | 232 | 236 | 257 | 261 | 241 | 240 | 245 |

< Example 34 >

(Preparation of Epoxy Resin Composition)

An epoxy resin composition was prepared by the following method.

Into a kneading apparatus, epoxy resins corresponding to the components [A], [D] and [F] listed in Table 5 were charged, the temperature was raised to 100°C, and the mixture was heated and kneaded at a temperature of 100°C for 30 minutes to dissolve the component [A].

Subsequently, while kneading was continued, the temperature was lowered to a temperature of 55 to 65°C, the component [B] described in Table 5 was added, and the mixture was stirred for 30 minutes to obtain an epoxy resin composition.

The amount of the component [B] was such that the active hydrogen contained in the component [B] amounts to 0.9 mol per 1 mol of epoxy groups contained in the components [A], [D] and [F].

As a result of measuring the viscosity of the obtained resin composition in accordance with "(1) Method of Measuring Glass Transition Temperature of Cured Epoxy Resin after Water Absorption" of the various evaluation methods described above, the glass transition temperature after water absorption was 205°C, and high heat resistance was obtained.

The theoretical molecular weight between crosslinking points was calculated for the obtained resin composition to be 255 g/mol, which was 220 g/mol or more.

(Preparation of Prepreg)

The resin composition obtained in the above was coated on a release paper using a knife coater to prepare two resin films with a resin areal weight of 51.2 g/m$^2$. Next, two of the obtained resin films were laminated on both sides of carbon fibers arranged in one direction in such a manner that the fiber areal weight was 190 g/m$^2$ in a sheet form, and heated and pressed under conditions of a temperature of 130°C and a maximum pressure of 1 MPa to impregnate the epoxy resin composition, thereby obtaining a prepreg having a fiber mass content of 65% by mass.

(Evaluation of Prepreg Properties)

The obtained prepreg was measured in accordance with "(5) Measurement of 0° Tensile Strength of Carbon Fiber-Reinforced Composite Material" of the various evaluation methods described above, thereby obtaining a high tensile strength suitable for composite materials for aircraft applications, which was 3,332 MPa.

The obtained prepreg was measured according to "(6) Measurement of Open Hole Compression Strength (OHC) of Carbon Fiber-Reinforced Composite Material under High Temperature Moisture Absorption Condition" of the various evaluation methods described above, thereby obtaining excellent open hole compression strength even at high temperature moisture absorption, which was 276 MPa.

< Examples 35 to 64 >

In Examples 35 to 64, as listed in Tables 5 to 8, an epoxy resin composition and a prepreg were prepared in the same manner as in Example 34 except that the type the components [A] to [F] contained in the epoxy resin composition was different.

Even when the types of components [A] to [F] were changed as in Examples 35 to 64, a high glass transition temperature after water absorption, excellent tensile strength, and excellent open hole compression strength at high temperature moisture absorption were obtained.

< Examples 65 to 66 >

Into the kneading apparatus, epoxy resins corresponding to the components [A], [D] and [F] listed in Table 8 were charged, the temperature was raised to 100°C, and the mixture was heated and kneaded at a temperature of 100°C for 30 hours to dissolve the component [A].

Subsequently, while kneading was continued, the temperature was lowered to a temperature of 55 to 65°C, the component [C] listed in Table 8 was added, the temperature was then raised to 160°C, and the mixture was stirred at a temperature of 160°C for 60 minutes.

Then, while kneading was continued, the temperature was lowered to a temperature of 55 to 65°C, the component [B] listed in Table 8 was added, and the mixture was stirred for 30 minutes to obtain an epoxy resin composition.

The obtained epoxy resin composition was used to prepare a prepreg in the same manner as in Example 34.

Even when the component [C] was added as in Examples 65 to 66, a high glass transition temperature after water absorption and excellent mechanical strength were obtained.

< Examples 67 to 71 >

In Examples 67 to 71, as listed in Table 8, an epoxy resin composition and a prepreg were prepared in the same manner as in Example 34 except that the type and amount of the components [A] to [F] contained in the epoxy resin composition were different.

Even when the types and amounts of the components [A] to [F] were different as in Examples 67 to 71, a high glass transition temperature after water absorption, excellent tensile strength, and excellent open hole compression strength at high temperature moisture absorption were obtained.

< Examples 72 to 75 >

In Examples 70 to 75, as listed in Tables 8 to 9, epoxy resin compositions and prepregs were prepared in the same manner as in Example 34 except that the type and the amount of the components [A] to [F] contained in the epoxy resin composition were different, and other epoxy resin components were added; Examples 74 and 75 do not illustrate claim 1.

Even when HP-4032D was added as the other epoxy resin component as in Example 72, high glass transition temperature after water absorption, excellent tensile strength, and excellent open hole compression strength at high temperature moisture absorption were obtained.

Even when GY282 was added as the other epoxy resin component as in Example 73, a high glass transition temperature after water absorption, excellent tensile strength, and excellent open hole compression strength at high temperature moisture absorption were obtained.

< Comparative Examples 6 to 7 >

An epoxy resin composition was prepared in the same manner as in Example 34 except that the composition was changed as listed in Table 9, prepregs were prepared by a hot melt method, and various measurements were carried out. The results of various measurements were as listed in Table 9.

In Comparative Example 6, the amount of the component [F] was 40 parts, and in addition, 0.9 equivalent of 3,3'-DAS was added as the component [B] to prepare an epoxy resin composition. The glass transition temperature after water absorption decreased to 155°C, and the heat resistance was reduced as compared with Example 32. The open hole compression strength after high temperature moisture absorption was also 243 MPa, which remarkably decreased as compared with Example 32.

In Comparative Example 7, an epoxy resin composition was prepared with the amount of the component [F] as 60 parts. As in Comparative Example 6, the glass transition temperature after water absorption decreased to 137°C, and the open hole compression strength after high temperature moisture absorption also decreased to 237 MPa.

< Comparative Examples 8 to 12 >

An epoxy resin composition was prepared in the same manner as in Example 34 except that the composition was changed as listed in Table 10, prepregs were prepared by a hot melt method, and various measurements were carried out. The results of various measurements are listed in Table 10.

When the glass transition temperature after water absorption was less than 180°C as in Comparative Examples 8 to 12, the open hole compression strength at the time of high temperature moisture absorption decreased as compared with Example 1.

Table 5

| | | equivalent | Unit | Example 34 | Example 35 | Example 36 | Example 37 | Example 38 | Example 39 | Example 40 | Example 41 | Example 42 | Example 43 |
|---|---|---|---|---|---|---|---|---|---|---|---|---|---|
| Component [A] | EXA-4701 | 167 | parts by mass | 40 | 40 | 40 | 40 | 40 | 40 | 40 | 40 | 40 | |
| | HP-4700 | 165 | parts by mass | | | | | | | | | | 40 |
| | EXA-4750 | 185 | parts by mass | | | | | | | | | | |
| Component [B] | SEIKACURE-S | 62 | equivalent | 0.9 | 0.9 | 0.9 | 0.9 | 0.9 | 0.9 | 0.9 | 0.9 | 0.9 | 0.9 |
| | 3,3'-DAS | 62 | equivalent | | | | | | | | | | |
| Component [C] | PES5003P | | parts by mass | | | | | | | | | | |
| | VW-10700RFP | | parts by mass | | | | | | | | | | |
| Component [D] | MY0600 | 118 | parts by mass | 40 | 40 | 40 | | | | | | | 40 |
| | MY0510 | 118 | parts by mass | | | | 40 | 40 | 40 | | | | |
| | ELM434 | 120 | parts by mass | | | | | | | 40 | 40 | 40 | |
| Component [F] | PG-01 | 167 | parts by mass | 20 | | | 20 | | | 20 | | | 20 |
| | Ex-731 | 216 | parts by mass | | 20 | | | 20 | | | 20 | | |
| | OPP-G | 226 | parts by mass | | | 20 | | | 20 | | | 20 | |
| | N,N-diglycidyl-3-(phenylsulfonyl)aniline | 173 | parts by mass | | | | | | | | | | |

(continued)

| | equivalent | Unit | Example 34 | Example 35 | Example 36 | Example 37 | Example 38 | Example 39 | Example 40 | Example 41 | Example 42 | Example 43 |
|---|---|---|---|---|---|---|---|---|---|---|---|---|
| Carbon fiber | "TORAYCA" T800S-24K-10E | - | Unidi rectiona l sheet | Unidirectional sheet | Unidi rectiona l sheet | Unidi rectiona l sheet | Unidi rectiona l sheet | Unidirectional sheet | Unidi rectiona l sheet | Unidi rectiona l sheet | Unidirectional sheet | Unidi rectiona l sheet |
| Epoxy resin physical properties | Theoretical molecular weight between crosslinking points | g/mol | 255 | 258 | 258 | 255 | 258 | 258 | 235 | 237 | 237 | 263 |
| | Glass transition temperature after water absorption | °C | 205 | 195 | 190 | 219 | 210 | 203 | 211 | 203 | 195 | 209 |
| Fiber-reinforce d composite material | Tensile strength | MPa | 3332 | 3284 | 3245 | 3302 | 3278 | 3233 | 3075 | 2989 | 3016 | 3291 |
| | Open hole compression strength at high temperature moisture ab | MPa | 276 | 278 | 271 | 282 | 277 | 274 | 282 | 277 | 275 | 281 |

[Table 6]

| | | equivalent | Unit | Example 44 | Example 45 | Example 46 | Example 47 | Example 48 | Example 49 | Example 50 | Example 51 | Example 52 | Example 53 |
|---|---|---|---|---|---|---|---|---|---|---|---|---|---|
| Component [A] | EXA-4701 | 167 | parts by mass | | | | | | | | | | |
| | HP-4700 | 165 | parts by mass | 40 | 40 | 40 | 40 | 40 | 40 | 40 | 40 | | |
| | EXA-4750 | 185 | parts by mass | | | | | | | | | 40 | 40 |
| Component [B] | SEIKACURE-S | 62 | equivalent | 0.9 | 0.9 | 0.9 | 0.9 | 0.9 | 0.9 | 0.9 | 0.9 | 0.9 | 0.9 |
| | 3,3'-DAS | 62 | equivalent | | | | | | | | | | |
| Component [C] | PES5003P | | parts by mass | | | | | | | | | | |
| | VW-10700RFP | | parts by mass | | | | | | | | | | |
| Component [D] | MY0600 | 118 | parts by mass | 40 | 40 | | | | | | | 40 | 40 |
| | MY0510 | 118 | parts by mass | | | 40 | 40 | 40 | | | | | |
| | ELM434 | 120 | parts by mass | | | | | | 40 | 40 | 40 | | |
| Component [F] | PG-01 | 167 | parts by mass | | | 20 | | | 20 | | | 20 | |
| | Ex-731 | 216 | parts by mass | 20 | | | 20 | | | 20 | | | 20 |
| | OPP-G | 226 | parts by mass | | 20 | | | 20 | | | 20 | | |
| | N,N-diglycidyl-3-(phenylsulfonyl)a niline | 173 | parts by mass | | | | | | | | | | |

(continued)

| | | Unit | Example 44 | Example 45 | Example 46 | Example 47 | Example 48 | Example 49 | Example 50 | Example 51 | Example 52 | Example 53 |
|---|---|---|---|---|---|---|---|---|---|---|---|---|
| | equivalent | | | | | | | | | | | |
| Carbon fiber | "TORAYCA" T800S-24K-10E | - | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Theoretical molecular weight between crosslinking points | g/mol | 266 | 267 | 263 | 266 | 267 | 241 | 244 | 244 | 293 | 297 |
| | Glass transition temperature after water absorption | °C | 198 | 193 | 220 | 211 | 207 | 216 | 208 | 200 | 199 | 190 |
| Fiber-reinforced composite material | Tensile strength | MPa | 3267 | 3169 | 3208 | 3160 | 3177 | 2857 | 2855 | 2925 | 3432 | 3298 |
| | Open hole compression strength at high temperature moisture absorption | MPa | 271 | 274 | 278 | 276 | 278 | 279 | 275 | 279 | 273 | 271 |

Table 7]

| | | equivalent | Unit | Example 54 | Example 55 | Example 56 | Example 57 | Example 58 | Example 59 | Example 60 | Example 61 | Example 62 | Example 63 |
|---|---|---|---|---|---|---|---|---|---|---|---|---|---|
| Component [A] | EXA-4701 | 167 | parts by mass | | | | | | | | | | |
| | HP-4700 | 165 | parts by mass | | | | | | | | | | |
| | EXA-4750 | 185 | parts by mass | 40 | 40 | 40 | 40 | 40 | 40 | 40 | 40 | 40 | 40 |
| Component [B] | SEIKACURE-S | 62 | equivalent | 0.9 | 0.9 | 0.9 | 0.9 | 0.9 | 0.9 | 0.9 | 0.9 | 0.9 | 0.9 |
| | 3,3'-DAS | 62 | equivalent | | | | | | | | | | |
| Component [C] | PES5003P | | parts by mass | | | | | | | | | | |
| | VW-10700RFP | | parts by mass | | | | | | | | | | |
| Component [D] | MY0600 | 118 | parts by mass | 40 | 40 | | | | | | | | |
| | MY0510 | 118 | parts by mass | | | 40 | 40 | 40 | 40 | | | | |
| | ELM434 | 120 | parts by mass | | | | | | | 40 | 40 | 40 | 40 |

(continued)

| | | | | | | | | | | | | | |
|---|---|---|---|---|---|---|---|---|---|---|---|---|---|
| Component [F] | PG-01 | 167 | parts by mass | | | 20 | | | | 20 | | | |
| | Ex-731 | 216 | parts by mass | | | | 20 | | | | 20 | | |
| | OPP-G | 226 | parts by mass | 20 | | | | 20 | | | | 20 | |
| | N,N-di glycidyl-3-(p henylsulfonyl) anilin e | 173 | parts by mass | | 20 | | | | 20 | | | | 20 |
| Carbon fiber | "TORAYCA" T800S-24K-10E | | - | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Theoretical molecular weight between crosslinking points | | g/mol | 298 | 293 | 293 | 297 | 298 | 293 | 266 | 270 | 270 | 267 |
| | Glass transition temperature after water absorption | | °C | 182 | 197 | 212 | 203 | 197 | 198 | 205 | 198 | 191 | 204 |
| Fiber -reinforced composite material | Tensile strength | | MPa | 3351 | 3420 | 3354 | 3330 | 3267 | 3422 | 3348 | 3305 | 3219 | 3342 |
| | Open hole compression strength at high temperature | | MPa | 266 | 272 | 283 | 276 | 277 | 273 | 278 | 272 | 276 | 274 |

Table 8]

| | | equivalent | Unit | Example 64 | Example 65 | Example 66 | Example 67 | Example 68 | Example 69 | Example 70 | Example 71 | Example 72 | Example 73 |
|---|---|---|---|---|---|---|---|---|---|---|---|---|---|
| Component [A] | EXA-4701 | 167 | parts by mass | 40 | 40 | 40 | 45 | 50 | 30 | 80 | 80 | | |
| | HP-4700 | 165 | parts by mass | | | | | | | | | 60 | 60 |
| | EXA-4750 | 185 | parts by mass | | | | | | | | | | |
| Component [B] | SEIKACURE-S | 62 | equivalent | | | | 0.9 | 0.9 | 0.9 | 0.9 | 0.9 | 0.9 | 0.9 |
| | 3,3'-DAS | 62 | equivalent | 0.9 | 0.9 | 0.9 | | | | | | | |
| Component [C] | PES5003P | | parts by mass | | 19 | | | | | | | | |
| | VW-10700RFP | | parts by mass | | | 19 | | | | | | | |
| Component [D] | MY0600 | 118 | parts by mass | | | | | | | | | | |
| | MY0510 | 118 | parts by mass | | 40 | 40 | 45 | 10 | 35 | 10 | | | |
| | ELM434 | 120 | parts by mass | 40 | | | | | | | 10 | | |
| Component [F] | PG-01 | 167 | parts by mass | | | | | 40 | 35 | | | 20 | 20 |
| | Ex-731 | 216 | parts by mass | 20 | 20 | 20 | 10 | | | 10 | 10 | | |
| | OPP-G | 226 | parts by mass | | | | | | | | | | |
| | N,N-diglycidyl-3-(phenylsulfonyl) aniline | 173 | parts by mass | | | | | | | | | | |

(continued)

| | | equivalent | Unit | Example 64 | Example 65 | Example 66 | Example 67 | Example 68 | Example 69 | Example 70 | Example 71 | Example 72 | Example 73 |
|---|---|---|---|---|---|---|---|---|---|---|---|---|---|
| Other epoxy resin | HP-4032D | 142 | parts by mass | | | | | | | | | 20 | |
| | GY282 | 172 | parts by mass | | | | | | | | | | 20 |
| Carbon fiber | "TORAYCA" T800S-24K-10E | | | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet | Unidirectional sheet |
| Epoxy resin physical properties | Theoretical molecular weight between crosslinking points | | g/mol | 237 | 258 | 258 | 242 | 288 | 280 | 240 | 235 | 290 | 292 |
| | Glass transition temperature after water absorption | | °C | 189 | 206 | 204 | 246 | 187 | 185 | 243 | 237 | 189 | 206 |
| Fiber-reinforc ed composite material | Tensile strength | MPa | 2918 | 3245 | 3251 | 2988 | 3430 | 3570 | 2899 | 2746 | 3340 | 3412 | |
| | Open hole compression strength at high temperature moisture absorption | MPa | 268 | 275 | 277 | 292 | 272 | 274 | 289 | 288 | 276 | 278 | |

[Table 9

| | | equivalent | Unit | Example 74 | Example 75 | Comparative Example 6 | Comparative Example 7 |
|---|---|---|---|---|---|---|---|
| Component [A] | EXA-4701 | 167 | parts by mass | 90 | 50 | 30 | 20 |
| | HP-4700 | 165 | parts by mass | | | | |
| | EXA-4750 | 185 | parts by mass | | | | |
| Component [B] | SEIKACURE-S | 62 | equivalent | 0.9 | 0.9 | | 0.9 |
| | 3,3'-DAS | 62 | equivalent | | | 0.9 | |
| Component [C] | PES5003P | | parts by mass | | | | |
| | VW-10700RFP | | parts by mass | | | | |
| Component [D] | MY0600 | 118 | parts by mass | | | | 20 |
| | MY0510 | 118 | parts by mass | 10 | | 30 | |
| | ELM434 | 120 | parts by mass | | 40 | | |
| Component [F] | PG-01 | 167 | parts by mass | | | | |
| | Ex-731 | 216 | parts by mass | | 10 | 40 | 60 |
| | OPP-G | 226 | parts by mass | | | | |
| | N,N-diglycidyl-3-(phenylsulfonyl)aniline | 173 | parts by mass | | | | |

(continued)

| | | equivalent | Unit | Example 74 | Example 75 | Comparative Example 6 | Comparative Example 7 |
|---|---|---|---|---|---|---|---|
| Other epoxy resin | HP-4032D | 142 | parts by mass | | | | |
| | GY282 | 172 | parts by mass | | | | |
| Carbon fiber | "TORAYCA" T800S-24K-10E | | - | Unidirectional sheet | Unidirectional sheet | Unidirectional sheet | Unidirectional sheet |
| Epoxy resin physical properties | Theoretical molecular weight between crosslinking points | | g/mol | 226 | 223 | 298 | 355 |
| | Glass transition temperature after water absorption | | °C | 244 | 239 | 155 | 137 |
| Fiber-reinforced composite material | Tensile strength | | MPa | 2632 | 2701 | 3326 | 3411 |
| | Open hole compression strength at high temperature moisture absorption | | MPa | 282 | 276 | 243 | 237 |

[Table 10]

| | | equivalent | Unit | Comparative Example 8 | Comparative Example 9 | Comparative Example 10 | Comparative Example 11 | Comparative Example 12 |
|---|---|---|---|---|---|---|---|---|
| Component [A] | EXA-4701 | 167 | parts by mass | | 100 | | | |
| | HP4700 | 165 | parts by mass | 25 | | 30 | 50 | |
| | EXA-4750 | 185 | parts by mass | | | | | 60 |
| Component [B] | SEIKACURE-S | 62 | equivalent | 1 | 0.1 | 1 | 1 | 0.5 |
| | 3,3'-DAS | 62 | equivalent | | 0.2 | | | |
| Component [C] | PES5003P | | parts by mass | | | | | 20 |
| | VW-10700RFP | | parts by mass | | | | | |
| | M22N | | parts bv mass | | | | 4 | |
| Component [D] | ELM120 | 118 | parts by mass | | | | 30 | |
| | jER604 | 120 | parts by mass | 6 | | | | |
| Component [E] | jER807 | 170 | parts by mass | 30 | | | | |
| | iER825 | 175 | parts by mass | | | 65 | | |
| | EX-411 | 230 | parts by mass | | | 5 | | |
| | EPICLON830 | 172 | parts by mass | | | | 20 | |
| Component [F] | PG-01 | 167 | parts by mass | | | | | 40 |

(continued)

| | | equivalent | Unit | Comparative Example 8 | Comparative Example 9 | Comparative Example 10 | Comparative Example 11 | Comparative Example 12 |
|---|---|---|---|---|---|---|---|---|
| Other components | Oligomer A | - | parts by mass | 45 | | | | |
| | EPIKURE W | - | parts bv mass | | 21 | | | |
| | t-butyl catechol | - | parts by mass | | 1 | | | |
| | Imidazole silane | - | parts by mass | | | | | 0.4 |
| Carbon fiber | "TORAYCA" T800S-24K-10E | | - | Unidirectional sheet | Unidirectional sheet | Unidirectional sheet | Unidirectional sheet | Unidirectional sheet |
| Epoxy resin physical properties | Theoretical molecular weight between crosslinking points | | g/mol | 286 | 181 | 347 | 248 | 346 |
| | Glass transition temperature after water absorption | | °C | 146 | 176 | 153 | 166 | 136 |
| | Viscosity n 50 at 50°C | | Pa·s | 162 | 9160 | 240 | 2560 | 3466 |
| | Minimum viscosity η min | | Pa·s | 0.04 | 1.27 | 0.05 | 1.01 | 1.13 |
| Prepreg | Tackiness property | | kg | 1.89 | 0.13 | 1.34 | 1.45 | 1.29 |
| | | | Evaluation | A | B | A | A | A |
| Fiber-reinforce d composite material | Tensile strength | MPa | 3210 | 2580 | 3285 | 2760 | 3264 | |
| | Open hole compression strength at high temperature moisture absorption | MPa | 224 | 229 | 231 | 223 | 221 | |

## Claims

1. A prepreg comprising an epoxy resin composition and reinforcing fiber, wherein the epoxy resin composition comprises the following component [A], component [B] and component [F], wherein the glass transition temperature of a cured product, which is obtained by curing the epoxy resin composition at 180°C for 2 hours, after immersing in boiling water at 1 atm for 48 hours is 180°C or more, and wherein the theoretical molecular weight between crosslinking points $\alpha$ of the cured epoxy resin composition, calculated as defined in the specification, is 230 g/mol or more;

   [A]: A tri- or more functional binaphthalene epoxy resin represented by the following general formula (A-1);

   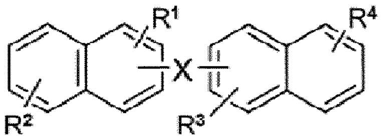 **(A−1)**

   in the formula, X represents an alkylene group having 1 to 8 carbon atoms or a group represented by the following general formula (A-2); $R^1$ to $R^5$ each represent a group represented by the following general formula (A-3) or (A-4), a hydrogen atom, a halogen atom, a phenyl group or an alkyl group having 1 to 4 carbon atoms; $R^1$ to $R^4$ may be bonded to either ring of naphthalene skeletons, or may be simultaneously bonded to both rings; $R^5$ may be added anywhere in the benzene skeleton; three or more of $R^1$ to $R^5$ need to be a group represented by the following general formula (A-3), or alternatively, at least one group represented by the general formula (A-3) and at least one group represented by the general formula (A-4) need to be included among $R^1$ to $R^5$, and other Rs may be the same as or different from each other;

   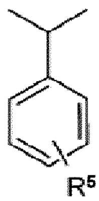 **(A−2)**

   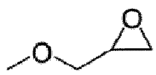 **(A−3)**

   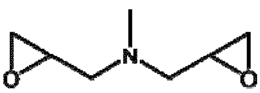 **(A−4)**

   [B]: an aromatic amine compound; and
   [F]: a monofunctional or bifunctional epoxy resin having two or more four- or more-membered ring structures and including a glycidylamino group or glycidylether group directly bonded to the ring structure.

2. The prepreg according to claim 1, wherein the epoxy resin composition further comprises a component [C]: a thermoplastic resin soluble in the epoxy resin composition.

3. The prepreg according to claim 1 or 2, wherein the epoxy resin composition further comprises a component [D]: a resin composition containing tri-or more functional glycidyl amine epoxy resin and 30 to 80% by mass of the component [A] is contained in 100% by mass of the total epoxy resin, wherein the glass transition temperature of a cured product, which is obtained by curing the epoxy resin composition at 180°C for 2 hours, after immersing in boiling water at 1 atm for 48 hours is 210°C or higher.

4. The prepreg according to claim 3, wherein the epoxy resin composition further comprises the component [D], wherein 10 to 60% by mass of the component [D] is contained in 100% by mass of the total epoxy resin.

5. The prepreg according to any one of claims 1 to 4, wherein the epoxy resin composition further comprises a component [E]: a bi- or more functional epoxy resin, other than a component [A], [D] or [F], in an amount of 10 to 40% by mass in 100% by mass of the total epoxy resin

6. The prepreg according to any one of claims 1 to 5, wherein the viscosity of the epoxy resin composition at 50°C is 50 to 5,000 Pa·s.

7. The prepreg according to any one of claims 1 to 6, wherein 20 to 60% by mass of an epoxy resin component which is liquid at 40°C is contained in the epoxy resin composition in 100% by mass of the total epoxy resin.

8. The prepreg according to any one of claims 1 to 7, wherein 30 to 80% by mass of the component [A] and 5 to 40% by mass of the component [F] are contained in 100% by mass of the total epoxy resin in the epoxy resin composition.

9. The prepreg according to any one of claims 1 to 8, wherein the component [F] of the epoxy resin composition has a structure represented by the general formula (F-1) below;

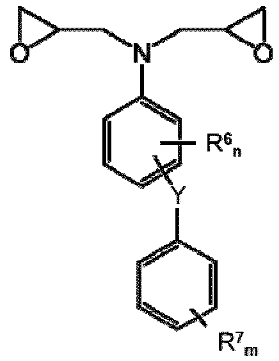

(F−1)

in the formula, $R^6$ and $R^7$ each independently represent at least one selected from the group consisting of an aliphatic hydrocarbon group having 1 to 4 carbon atoms, an alicyclic hydrocarbon group having 3 to 6 carbon atoms, an aromatic hydrocarbon group having 6 to 10 carbon atoms, a halogen atom, an acyl group, a trifluoromethyl group and a nitro group; n is an integer of 0 to 4, and m is an integer of 0 to 5; and Y represents one selected from -O-, -S-, -CO-, -C(=O)O-, $-SO_2-$.

10. The prepreg according to any one of claims 1 to 8, wherein component [F] of the epoxy resin composition is a monofunctional epoxy resin.

11. The prepreg according to any one of claims 1 to 10, wherein component [B] of the epoxy resin composition is a diaminodiphenyl sulfone.

12. A fiber-reinforced composite material containing a cured product of the prepreg according to any one of claims 1 to 11.

**Patentansprüche**

1. Prepreg, das eine Epoxidharz-Zusammensetzung und Verstärkungsfasern umfasst, wobei die Epoxidharz-Zusammensetzung die nachstehenden Komponenten [A], [B] und [F] umfasst, wobei die Glasübergangstemperatur eines gehärteten Produkts, das durch 2-stündiges Härten der Epoxidharz-Zusammensetzung bei 180 °C nach 48-stündigem Eintauchen in kochendes Wasser bei 1 atm erhältlich ist, 180 °C oder mehr beträgt und wobei das theoretische Molekulargewicht zwischen Vernetzungspunkten $\alpha$ der gehärteten Epoxidharz-Zusammensetzung, das wie in der Beschreibung definiert berechnet wird, 230 g/mol oder mehr beträgt;

[A]: ein tri- oder mehrfunktionelles Binaphthalin-Epoxidharz, das durch die folgende allgemeine Formel (A-1) dargestellt ist:

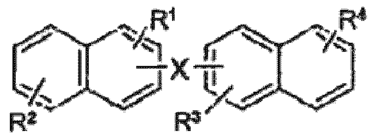 (A-1)

wobei in der Formel X für eine Alkylengruppe mit 1 bis 8 Kohlenstoffatomen oder für eine Gruppe, die durch die nachstehende allgemeine Formel (A-2) dargestellt ist, steht; $R^1$ bis $R^5$ jeweils für eine Gruppe, die durch die nachstehende allgemeine Formel (A-3) oder (A-4) dargestellt ist, ein Wasserstoffatom, ein Halogenatom, eine Phenylgruppe oder eine Alkylgruppe mit 1 bis 4 Kohlenstoffatomen stehen; wobei $R^1$ bis $R^4$ an einen der beiden Ringe der Naphthalin-Gerüste oder gleichzeitig an beide Ringe gebunden sein können; $R^5$ an beliebiger Stelle im Benzol-Gerüst hinzugefügt sein kann; drei oder mehr von $R^1$ bis $R^5$ eine Gruppe sein müssen, die durch die nachstehende allgemeine Formel (A-3) dargestellt ist, oder alternativ dazu zumindest eine Gruppe, die durch die nachstehende allgemeine Formel (A-3) dargestellt ist, und zumindest eine Gruppe, die durch die nachstehende allgemeine Formel (A-4) dargestellt ist von $R^1$ bis $R^5$ umfasst sein müssenund die anderen R gleich oder unterschiedlich sein können;

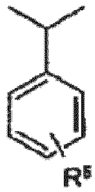 (A-2)

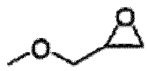 (A-3)

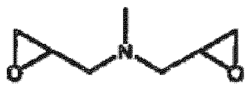 (A-4)

[B]: eine aromatische Aminverbindung; und

[F]: ein monofunktionelles oder bifunktionelles Epoxidharz mit zwei oder mehr vier- oder mehrgliedrigen Ringstrukturen, das eine Glycidylaminogruppe oder Glycidylethergruppe umfasst, die direkt mit der Ringstruktur verbunden ist.

**2.** Prepreg nach Anspruch 1, wobei die Epoxidharz-Zusammensetzung außerdem eine Komponente [C] umfasst: ein thermoplastisches Harz, das in der Epoxidharz-Zusammensetzung löslich ist.

**3.** Prepreg nach Anspruch 1 oder 2, wobei die Epoxidharz-Zusammensetzung außerdem eine Komponente [D] umfasst: eine Harzzusammensetzung, die ein tri- oder mehrfunktionelles Glycidylamin-Epoxidharz enthält, wobei 30 bis 80 Massen-% der Komponente [A] in 100 Massen-% des gesamten Epoxidharzes enthalten sind, wobei die Glasübergangstemperatur eines gehärteten Produkts, das durch 2-stündiges Härten der Epoxidharz-Zusammensetzung bei 180 °C nach 48-stündigem Eintauchen in kochendes Wasser bei 1 atm erhältlich ist, 210 °C oder mehr beträgt.

**4.** Prepreg nach Anspruch 3, wobei die Epoxidharz-Zusammensetzung außerdem die Komponente [D] umfasst, wobei 10 bis 60 Massen-% der Komponente [D] in 100 Massen-% des gesamten Epoxidharzes enthalten sind.

**5.** Prepreg nach einem der Ansprüche 1 bis 4, wobei die Epoxidharz-Zusammensetzung außerdem eine Komponente [E] umfasst: ein bi- oder mehrfunktionelles Epoxidharz, das sich von den Komponenten [A], [D] oder [F] unterscheidet, in einer Menge von 10 bis 40 Massen-% in 100 Massen-% des gesamten Epoxidharzes.

**6.** Prepreg nach einem der Ansprüche 1 bis 5, wobei die Viskosität der Epoxidharz-Zusammensetzung bei 50 °C 50 bis 5.000 Pa·s beträgt.

**7.** Prepreg nach einem der Ansprüche 1 bis 6, wobei 20 bis 60 Massen-% einer Epoxidharz-Komponente, die bei 40

°C flüssig ist, in der Epoxidharz-Zusammensetzung in 100 Massen-% des gesamten Epoxidharzes enthalten sind.

8. Prepreg nach einem der Ansprüche 1 bis 7, wobei 30 bis 80 Massen-% der Komponente [A] und 5 bis 40 Massen-% der Komponente [F] in 100 Massen-% des gesamten Epoxidharzes in der Epoxidharz-Zusammensetzung enthalten sind.

9. Prepreg nach einem der Ansprüche 1 bis 8, wobei die Komponente [F] der Epoxidharz-Zusammensetzung eine Struktur aufweist, die durch die nachstehende allgemeine Formel (F-1) dargestellt ist:

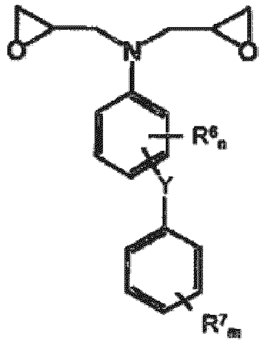

(F−1)

wobei in der Formel $R^6$ und $R^7$ jeweils unabhängig für zumindest eine aus der aus Folgendem bestehenden Gruppe stehen: eine aliphatische Kohlenwasserstoffgruppe mit 1 bis 4 Kohlenstoffatomen, eine alicyclische Kohlenwasserstoffgruppe mit 3 bis 6 Kohlenstoffatomen, eine aromatische Kohlenwasserstoffgruppe mit 6 bis 10 Kohlenstoffatomen, ein Halogenatom, eine Acylgruppe, eine Trifluormethylgruppe und eine Nitrogruppe; n eine ganze Zahl von 0 bis 4 ist und m eine ganze Zahl von 0 bis 5 ist; und Y für eines aus -O-, -S-, -CO-, -C(=O)O- und $-SO_2-$ steht.

10. Prepreg nach einem der Ansprüche 1 bis 8, wobei die Komponente [F] der Epoxidharz-Zusammensetzung ein monofunktionelles Epoxidharz ist.

11. Prepreg nach einem der Ansprüche 1 bis 10, wobei die Komponente [B] der Epoxidharz-Zusammensetzung ein Diaminodiphenylsulfon ist.

12. Faserverstärktes Verbundmaterial, das ein gehärtetes Produkt aus einem Prepreg nach einem der Ansprüche 1 bis 11 enthält.

**Revendications**

1. Préimprégné comprenant une composition de résine époxy et une fibre de renforcement, dans laquelle la composition de résine époxy comprend le composant [A], le composant [B] et le composant [F] suivants, dans lequel la température de transition vitreuse d'un produit durci obtenu par durcissement de la composition de résine époxy pendant deux heures à 180°C, après immersion pendant 48 heures dans de l'eau en ébullition sous 1 atm, est de 180°C ou plus, et dans lequel le poids moléculaire théorique entre de points de réticulation $\alpha$ de la composition de résine époxy durcie, calculé comme défini dans la description, est de 230 g/mole ou plus ;

[A] : une résine époxy de binaphtalène trifonctionnelle ou plus représentée par la formule générale (A-1) suivante ;

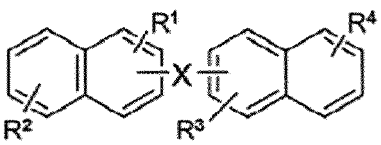

(A−1)

dans la formule, X représente un groupe alkylène ayant 1 à 8 atomes de carbone ou un groupe représenté par la formule générale (A-2) suivante ; $R^1$ à $R^5$ représentent chacun un groupe représenté par la formule générale

(A-3) ou (A-4) suivante, un atome d'hydrogène, un atome d'halogène, un groupe phényle ou un groupe alkyle ayant 1 à 4 atomes de carbone ; $R^1$ à $R^4$ peuvent être liés à l'un ou l'autre cycle de squelettes de naphtalène, ou peuvent être simultanément liés aux deux cycles ; $R^5$ peut être ajouté n'importe où dans le squelette de benzène ; trois ou plus de $R^1$ à $R^5$ doivent être un groupe représenté par la formule générale (A-3) suivante, ou bien, au moins un groupe représenté par la formule générale (A-3) et au moins un groupe représenté par la formule générale (A-4) doivent être inclus parmi $R^1$ à $R^5$, et d'autres R peuvent être identiques ou différents les uns des autres ;

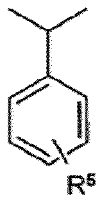

(A−2)

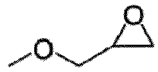

(A−3)

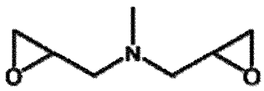

(A−4)

[B] : un composé d'aminé aromatique ; et
[F] : une résine époxy monofonctionnelle ou bifonctionnelle ayant deux structures de cycle à quatre éléments ou plus et comprenant un groupe glycidylamino ou un groupe glycidyléther directement lié à la structure de cycle.

2. Préimprégné selon la revendication 1, dans lequel la composition de résine époxy comprend en outre un composant [C] : une résine thermoplastique soluble dans la composition de résine époxy.

3. Préimprégné selon la revendication 1 ou 2, dans lequel la composition de résine époxy comprend en outre un composant [D] : une composition de résine contenant une résine époxy de glycidylamine trifonctionnelle ou plus et 30 à 80 % en masse du composant [A] est contenue dans 100 % en masse de la résine époxy totale, dans lequel la température de transition vitreuse d'un produit durci obtenu par durcissement de la composition de résine époxy pendant deux heures à 180°C, après immersion pendant 48 heures dans de l'eau en ébullition sous 1 atm, est de 210°C ou plus.

4. Préimprégné selon la revendication 3, dans lequel la composition de résine époxy comprend en outre le composant [D], dans lequel 10 à 60 % en masse du composant [D] sont contenus dans 100 % en masse de la résine époxy totale.

5. Préimprégné selon l'une quelconque des revendications 1 à 4, dans lequel la composition de résine époxy comprend en outre un composant [E] : une résine époxy bifonctionnelle ou plus, autre qu'un composant [A], [D] ou [F], en une quantité de 10 à 40 % en masse dans 100 % en masse de la résine époxy totale.

6. Préimprégné selon l'une quelconque des revendications 1 à 5, dans lequel la viscosité de la composition de résine époxy à 50°C est de 50 à 5 000 Pa.s

7. Préimprégné selon l'une quelconque des revendications 1 à 6, dans lequel 20 à 60 % en masse d'un composant de résine époxy qui est liquide à 40°C sont contenus dans la composition de résine époxy dans 100 % en masse de la résine époxy totale.

8. Préimprégné selon l'une quelconque des revendications 1 à 7, dans lequel 30 à 80 % en masse du composant [A] et 5 à 40 % en masse du composant [F] sont contenus dans 100 % en masse de la résine époxy totale dans la composition de résine époxy.

9. Préimprégné selon l'une quelconque des revendications 1 à 8, dans lequel le composant [F] de la composition de résine époxy a une structure représentée par la formule générale (F-1) ci-dessous ;

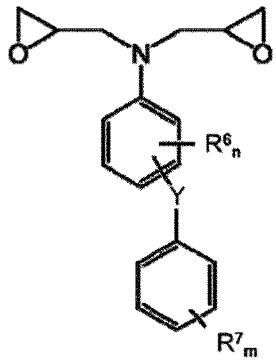

(F−1)

dans la formule, $R^6$ et $R^7$ représentent chacun indépendamment au moins un choisi dans le groupe constitué par un groupe hydrocarboné aliphatique ayant 1 à 4 atomes de carbone, un groupe hydrocarboné alicyclique ayant 3 à 6 atomes de carbone, un groupe hydrocarboné aromatique ayant 6 à 10 atomes de carbone, un atome d'halogène, un groupe acyle, un groupe trifluorométhyle et un groupe nitro ; n est un entier de 0 à 4, et m est un entier de 0 à 5 ; et Y représente un choisi parmi -O-, -S-, -CO-, -C(=O)O-, $-SO_2-$.

**10.** Préimprégné selon l'une quelconque des revendications 1 à 8, dans lequel le composant [F] de la composition de résine époxy est une résine époxy monofonctionnelle.

**11.** Préimprégné selon l'une quelconque des revendications 1 à 10, dans lequel le composant [B] de la composition de résine époxy est une diaminodiphénylsulfone.

**12.** Matériau composite renforcé par des fibres contenant un produit durci du préimprégné selon l'une quelconque des revendications 1 à 11.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S6028420 A
- JP 2005298815 A
- JP 2009242585 A
- JP 2014145017 A
- JP 2014114369 A
- JP 2014145018 A
- GB 2460050 A
- WO 2015005411 A
- JP H01104624 A